# EUROPEAN PATENT APPLICATION

(11) **EP 4 546 124 A1**
(43) Date of publication of application: **30.04.2025**
(21) Application number: 23845644.6
(22) Date of filing: 27.07.2023
(51) Int. Cl.: G06F 9/451, B60K 35/00, B60K 35/10, B60K 35/22, B60K 35/65

(54) **DISPLAY METHOD, APPARATUS, AND MOVING CARRIER**

(30) Priority: 29.07.2022 CN 202210904906
(71) Applicant: Shenzhen Yinwang Intelligent Technologies Co., Ltd., Shenzhen, Guangdong 518129 (CN)
(72) Inventor: LI, Ping, Shenzhen, Guangdong 518129 (CN); HUANG, Yinghua, Shenzhen, Guangdong 518129 (CN); WEI, Zhigang, Shenzhen, Guangdong 518129 (CN); LI, Qinglei, Shenzhen, Guangdong 518129 (CN)
(74) Representative: Gill Jennings & Every LLP
(86) International application number: PCT/CN2023/109570
(87) International publication number: WO 2024/022437

(57) **Abstract**

Embodiments of this application provide a display method, an apparatus, and a mobile carrier. The method includes: when it is detected that a first user is located in a first area in a mobile carrier, displaying a first interface element in a first display area, where the first interface element includes an interface element associated with the first user, and there is a correspondence between the first area and the first display area. Embodiments of this application may be applied to an intelligent vehicle or an electric vehicle, to help improve a degree of intelligence of the vehicle and also help improve user experience.

## Description

This application claims priority to Chinese Patent Application No. 202210904906.0, filed with the China National Intellectual Property Administration on July 29, 2022 and entitled "DISPLAY METHOD, APPARATUS, AND MOBILE CARRIER", which is incorporated herein by reference in its entirety.

### TECHNICAL FIELD

Embodiments of this application relate to the field of intelligent cabins, and more specifically, to a display method, an apparatus, and a mobile carrier.

### BACKGROUND

With improvement of vehicle intelligence and network connection, a vehicle cabin gradually develops towards a multi-screen-linked intelligent cabin with human-machine interaction as a core. Currently, content displayed on a vehicle-mounted display in an intelligent cabin is excessively simple. Therefore, in a process of using the vehicle-mounted display, how to meet user experience becomes an urgent problem to be resolved.

### SUMMARY

Embodiments of this application provide a display method, an apparatus, and a mobile carrier, to help improve a degree of intelligence of the mobile carrier and also help improve user experience.

The mobile carrier in this application may include a road transportation means, a water transportation means, an air transportation means, an industrial device, an agricultural device, an entertainment device, or the like. For example, the mobile carrier may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the mobile carrier may be a transportation means like an airplane or a ship.

According to a first aspect, a display method is provided. The method includes: displaying a first interface element in a first display area when it is detected that a first user is located in a first area in a mobile carrier, where the first interface element includes an interface element associated with the first user, and there is a correspondence between the first area and the first display area.

In this embodiment of this application, when it is detected that the first user is located in the first area in the mobile carrier, the interface element related to the first user may be displayed in the first display area corresponding to the first area, so that the first user can view the interface element related to the first user in the first display area, and the first user can operate the first interface element in the first display area. This helps improve a degree of intelligence of the mobile carrier, and also helps improve driving experience of the user.

In some possible implementations, the displaying a first interface element in a first display area when it is detected that a first user is located in a first area in a mobile carrier includes: when it is detected that there is a user in the first area, collecting a biometric feature of the user; determining, based on the biometric feature, that the first user is located in the first area; and displaying the first interface element in the first display area.

In some possible implementations, the biometric feature includes one or more of a voiceprint feature, face information, iris information, a fingerprint feature, an auricle shape, a weight, bone density, a height, or a hand length.

With reference to the first aspect, in some implementations of the first aspect, the method further includes: when it is detected that the first user is located in a second area in the mobile carrier, displaying the first interface element in a second display area, where there is a correspondence between the second area and the second display area.

In this embodiment of this application, when it is detected that the first user is located in the second area in the mobile carrier, the first interface element may be displayed in the second display area corresponding to the second area, so that the first user can view the interface element related to the first user in the second display area, and the first user can operate the first interface element in the second display area. This helps improve driving experience of the user. In addition, when an area of the first user in the mobile carrier changes, a display area of the first interface element may change accordingly, so that the first interface element is pushed to a corresponding display area along with the area of the user, thereby helping improve driving experience of the user in a plurality of display areas.

With reference to the first aspect, in some implementations of the first aspect, the first user leaves the first area at a first moment, and the displaying a first interface element in a first display area includes: displaying a play interface of a first multimedia file in the first display area, where a play progress of the first multimedia file at the first moment is a first progress. The displaying the first interface element in a second display area includes: displaying, in the second display area, the play interface at the first progress.

In this embodiment of this application, when it is detected that the first user is located in the second area of the mobile carrier, the mobile carrier may restore, in the second display area, a progress of viewing the multimedia file in another area by the user, and the user does not need to open the multimedia file again and play the multimedia file from the beginning. This saves complex operations performed by the user when the user views the multimedia file, helps improve a degree of intelligence of the mobile carrier, and helps improve driving experience of the user.

In some possible implementations, the first multimedia file includes a video, a picture, or music.

With reference to the first aspect, in some implementations of the first aspect, the method further includes: when it is detected that a second user is located in a second area in the mobile carrier, displaying a second interface element in a second display area, where the second interface element includes an interface element associated with the second user, and there is a correspondence between the second area and the second display area.

In this embodiment of this application, when it is detected that the second user is located in the second area in the mobile carrier, the second interface element associated with the second user may be displayed in the second display area corresponding to the second area, so that the second user can view the interface element related to the second user in the second display area, and the second user can operate the second interface element in the second display area. This helps improve driving experience of the user. In addition, interface elements related to different users may be respectively displayed in different display areas of the mobile carrier. In this way, requirements of different users may be met when the mobile carrier includes a plurality of display areas.

For example, when it is detected that the first user is located in the first area of the mobile carrier, the first interface element related to an account of the first user may be displayed in the first display area. When it is detected that the second user is located in the second area of the mobile carrier, the second interface element related to an account of the second user may be displayed in the second display area. In this way, in the plurality of display areas of the mobile carrier, accounts of a plurality of users may be logged in to, so that requirements and driving experience of different users can be met.

With reference to the first aspect, in some implementations of the first aspect, the method further includes: when it is detected that the first user is located in the second area and the second user is located in the first area, displaying the second interface element in the first display area, and displaying the first interface element in the second display area.

In this embodiment of this application, when it is detected that the first user is located in the first area and the second user is located in the second area, the first interface element may be displayed in the first display area, and the second interface element may be displayed in the second display area. When it is detected that the first user is located in the second area and the second user is located in the first area, the second interface element is displayed in the first display area, and the first interface element is displayed in the second display area. In this way, after areas in which the first user and the second user are located change, display areas in which the first interface element and the second interface element are located may be correspondingly adjusted, and the user does not need to perform manual adjustment. This helps improve a degree of intelligence of the mobile carrier, thereby helping improve driving experience of the user.

In some possible implementations, detecting that the first user is located in the second area and the second user is located in the first area includes: detecting that the first user moves from the first area to the second area, and detecting that the second user moves from the second area to the first area.

With reference to the first aspect, in some implementations of the first aspect, the first user is the same as the second user, and the first interface element is the same as the second interface element.

In this embodiment of this application, if the first user and the second user are a same user, when the user is separately located in the first area and the second area of the mobile carrier, a same interface element may be displayed in the first display area and the second display area. In this way, when an area in which the user is located changes, the mobile carrier may adjust an interface element associated with the user to a display area of an area in which the user is located for display, so that the user can view the interface element associated with the user in different areas. This helps improve driving experience of the user.

With reference to the first aspect, in some implementations of the first aspect, the method further includes: when it is detected that there is no user in the first area, controlling the first display area to enter a screen-off state, or displaying a sleep display interface in the first display area.

In this embodiment of this application, when it is detected that there is no user in the first area, the first display area may be controlled to enter the screen-off state or display the sleep display interface. In this way, power consumption of the mobile carrier can be reduced.

With reference to the first aspect, in some implementations of the first aspect, the first interface element is associated with identity information or a human body feature of the first user.

In some possible implementations, the mobile carrier stores identity information of one or more users. If the identity information of the first user matches the identity information of the one or more users, an interface element associated with the identity information of the first user may be displayed in the display area of the area in which the first user is located.

In some possible implementations, if the mobile carrier does not store identity information of a user, an interface element associated with the human body feature of the first user may be displayed in the display area of the area in which the first user is located. Alternatively, the mobile carrier stores identity information of one or more users. If the identity information of the first user does not match the identity information of the one or more users, an interface element associated with the human body feature of the first user may be displayed in the display area of the area in which the first user is located.

In some possible implementations, the human body feature includes a gender, an age, and the like.

With reference to the first aspect, in some implementations of the first aspect, the first interface element includes the interface element associated with the identity information of the first user. The method further includes: before displaying the first interface element in the first display area, detecting an operation of logging in to an account of the first user in the first display area.

In this embodiment of this application, when the first user is located in the first area, an operation of logging in to an account in the first display area may be performed, so that the interface element associated with the identity information of the first user is displayed in the first display area. This facilitates the first user to view, in the first display area, the interface element associated with the first user.

In some possible implementations, the operation includes but is not limited to a voice interaction operation, an operation of tapping a facial recognition login control, an operation of tapping and scanning a QR code for login, a fingerprint recognition operation, or the like.

With reference to the first aspect, in some implementations of the first aspect, the first interface element includes the interface element associated with the human body feature of the first user. The method further includes: before displaying the first interface element in the first display area, detecting that the first user does not log in to an account in the first display area within first duration, or detecting that the identity information of the first user does not match, within the first duration, the identity information of the one or more users stored in the mobile carrier.

In this embodiment of this application, if the mobile carrier does not detect, within the first duration starting from a moment at which the first user is located in the first area, an operation of logging in to the account by the first user, or the mobile carrier detects that the identity information of the first user does not match the identity information of the one or more users stored in the mobile carrier, the interface element associated with the human body feature of the first user may be displayed in the first display area. In this way, a corresponding interface element is displayed for the first user by using the human body feature of the first user. This helps meet requirements of different users for using interface elements, and also helps improve a degree of intelligence of the mobile carrier, so that requirements and driving experience of different users can be met.

With reference to the first aspect, in some implementations of the first aspect, the mobile carrier includes a first vehicle-mounted display, and the first vehicle-mounted display includes the first display area and the second display area.

For example, the first vehicle-mounted display may be a long connected screen, and the long connected screen may include the first display area and the second display area. For example, there may be a correspondence between the first display area and a driving area, and there may be a correspondence between the second display area and a front passenger area.

With reference to the first aspect, in some implementations of the first aspect, the mobile carrier includes a first vehicle-mounted display and a second vehicle-mounted display, the first vehicle-mounted display includes the first display area, and the second vehicle-mounted display includes the second display area.

In this embodiment of this application, the first display area and the second display area may be respectively located on different vehicle-mounted displays.

With reference to the first aspect, in some implementations of the first aspect, the first interface element includes one or more of a wallpaper, an animation, an icon of an application, or a card.

According to a second aspect, a control apparatus is provided. The control apparatus includes a detection unit and a control unit. The detection unit is configured to detect whether a first user is located in a first area in a mobile carrier. The control unit is configured to: when the detection unit detects that the first user is located in the first area, control a first display area to display a first interface element, where the first interface element includes an interface element associated with the first user, and there is a correspondence between the first area and the first display area.

With reference to the second aspect, in some implementations of the second aspect, the control unit is further configured to: when the detection unit detects that the first user is located in a second area in the mobile carrier, control a second display area to display the first interface element, where there is a correspondence between the second area and the second display area.

With reference to the second aspect, in some implementations of the second aspect, the first user leaves the first area at a first moment, and the control unit is specifically configured to: when the detection unit detects that the first user is located in the first area, control the first display area to display a play interface of a first multimedia file, where a play progress of the first multimedia file at the first moment is a first progress; and when the detection unit detects that the first user is located in the second area, control the second display area to display the play interface at the first progress.

With reference to the second aspect, in some implementations of the second aspect, the control unit is further configured to: when the detection unit detects that a second user is located in a second area in the mobile carrier, control a second display area to display a second interface element, where the second interface element includes an interface element associated with the second user, and there is a correspondence between the second area and the second display area.

With reference to the second aspect, in some implementations of the second aspect, the control unit is further configured to: when the detection unit detects that the first user is located in the second area and the second user is located in the first area, control the first display area to display the second interface element, and control the second display area to display the first interface element.

With reference to the second aspect, in some implementations of the second aspect, the first user is the same as the second user, and the first interface element is the same as the second interface element.

With reference to the second aspect, in some implementations of the second aspect, the control unit is further configured to: when the detection unit detects that there is no user in the first area, control the first display area to enter a screen-off state, or control the first display area to display a sleep display interface.

With reference to the second aspect, in some implementations of the second aspect, the first interface element is associated with identity information or a human body feature of the first user.

With reference to the second aspect, in some implementations of the second aspect, the first interface element includes an interface element associated with the identity information of the first user. The detection unit is further configured to: before the control unit controls the first display area to display the first interface element, detect an operation of logging in to an account of the first user in the first display area.

With reference to the second aspect, in some implementations of the second aspect, the first interface element includes an interface element associated with the human body feature of the first user. The detection unit is further configured to: before the control unit controls the first display area to display the first interface element, detect that the first user does not log in to an account in the first display area within first duration.

With reference to the second aspect, in some implementations of the second aspect, the first display area and the second display area are display areas in a first vehicle-mounted display.

With reference to the second aspect, in some implementations of the second aspect, the first display area is a display area in a first vehicle-mounted display, and the second display area is a display area in a second vehicle-mounted display.

With reference to the second aspect, in some implementations of the second aspect, the first interface element includes one or more of a wallpaper, an animation, an icon of an application, or a card.

According to a third aspect, a display method is provided. The display method includes: when it is detected that a first user is located in a first area in a mobile carrier, displaying a first interface element in a first display area, where the first interface element includes an interface element associated with the first user, and there is a correspondence between the first area and the first display area; and when it is detected that the first user is located in a second area in the mobile carrier, displaying the first interface element in a second display area, where there is a correspondence between the second area and the second display area.

With reference to the third aspect, in some implementations of the third aspect, detecting that the first user is located in a second area in the mobile carrier includes: detecting that the first user switches from the first area to the second area.

With reference to the third aspect, in some implementations of the third aspect, the first user leaves the first area at a first moment, and the displaying a first interface element in a first display area includes: displaying a play interface of a first multimedia file in the first display area, where a play progress of the first multimedia file at the first moment is a first progress. The displaying the first interface element in a second display area includes: displaying, in the second display area, the play interface at the first progress.

According to a fourth aspect, a control apparatus is provided. The control apparatus includes a detection unit and a control unit. The detection unit is configured to detect whether a first user is located in a first area in a mobile carrier. The control unit is configured to: when the detection unit detects that the first user is located in the first area, control a first display area to display a first interface element, where the first interface element includes an interface element associated with the first user, and there is a correspondence between the first area and the first display area. The control unit is further configured to: when the detection unit detects that the first user is located in a second area in the mobile carrier, control a second display area to display the first interface element, where there is a correspondence between the second area and the second display area.

With reference to the fourth aspect, in some implementations of the fourth aspect, the detection unit is specifically configured to detect that the first user switches from the first area to the second area.

With reference to the fourth aspect, in some implementations of the fourth aspect, the first user leaves the first area at a first moment, and the control unit is specifically configured to: when the detection unit detects that the first user is located in the first area, control the first display area to display a play interface of a first multimedia file, where a play progress of the first multimedia file at the first moment is a first progress; and when the detection unit detects that the first user is located in the second area in the mobile carrier, control the second display area to display the play interface at the first progress.

According to a fifth aspect, an apparatus is provided. The apparatus includes a processing unit and a storage unit. The storage unit is configured to store instructions, and the processing unit executes the instructions stored in the storage unit, so that the apparatus performs the method in any possible implementation of the first aspect or any possible implementation of the third aspect.

Optionally, the processing unit may include at least one processor, and the storage unit may be a memory. The memory may be a storage unit (for example, a register or a cache) in a chip, or may be a storage unit (for example, a read-only memory, or a random access memory) located outside a chip in a mobile carrier.

According to a sixth aspect, a display system is provided. The display system includes a computing platform and a display apparatus, and the computing platform includes the apparatus according to any one of the second aspect, the fourth aspect, or the fifth aspect.

In some possible implementations, the display apparatus is a vehicle-mounted display.

According to a seventh aspect, a mobile carrier is provided. The mobile carrier includes the apparatus according to any one of the second aspect, the fourth aspect, or the fifth aspect, or the mobile carrier includes the display system according to the sixth aspect.

With reference to the seventh aspect, in some implementations of the seventh aspect, the mobile carrier is a vehicle.

According to an eighth aspect, a computer program product is provided. The computer program product includes computer program code. When the computer program code is run on a computer, the computer is enabled to perform the method in any possible implementation of the first aspect or any possible implementation of the third aspect.

It should be noted that all or some of the computer program code may be stored in a first storage medium. The first storage medium may be encapsulated together with a processor, or may be encapsulated separately from a processor. This is not specifically limited in this embodiment of this application.

According to a ninth aspect, a computer-readable medium is provided. The computer-readable medium stores program code. When the computer program code is run on a computer, the computer is enabled to perform the method in any possible implementation of the first aspect or any possible implementation of the third aspect.

According to a tenth aspect, an embodiment of this application provides a chip system. The chip system includes a processor, configured to invoke a computer program or computer instructions stored in a memory, so that the processor performs the method in any possible implementation of the first aspect or any possible implementation of the third aspect.

With reference to the tenth aspect, in a possible implementation, the processor is coupled to the memory through an interface.

With reference to the tenth aspect, in a possible implementation, the chip system further includes a memory. The memory stores a computer program or computer instructions.

According to an eleventh aspect, a control apparatus is provided. The control apparatus includes at least one processor and an interface circuit. The processor communicates with a display apparatus through the interface circuit. The at least one processor is configured to perform the method in any possible implementation of the first aspect or any possible implementation of the third aspect, to control a display interface of the display apparatus.

In some possible implementations, the display apparatus is a vehicle-mounted display.

In embodiments of this application, when it is detected that the first user is located in the first area in the mobile carrier, the interface element related to the first user may be displayed in the first display area corresponding to the first area, so that the first user can view the interface element related to the first user in the first display area, and the first user can operate the first interface element in the first display area. This helps improve driving experience of the user.

When an area of the first user in the mobile carrier changes, a display area of the first interface element may change accordingly, so that the first interface element is pushed to a corresponding display area along with the area of the user, thereby helping improve driving experience of the user in a plurality of display areas.

When it is detected that the first user is located in a specific area of the mobile carrier, the mobile carrier may restore a progress of viewing a multimedia file in another area by the user, and the user does not need to open the multimedia file again and play the multimedia file from the beginning. This saves complex operations performed by the user when the user views the multimedia file, helps improve a degree of intelligence of the mobile carrier, and helps improve driving experience of the user.

When the first user is located in the first area and the second user is located in the second area, the mobile carrier may respectively display, in the first display area and the second display area, the interface element related to the first user and the interface element related to the second user. In this way, when the mobile carrier includes a plurality of display areas, requirements and driving experience of different users can be met.

After areas in which the first user and the second user are located change, display areas in which the first interface element and the second interface element are located may be correspondingly adjusted, and the user does not need to perform manual adjustment. This helps improve a degree of intelligence of the mobile carrier, thereby helping improve driving experience of the user.

### BRIEF DESCRIPTION OF DRAWINGS

FIG. 1 is a functional block diagram of a vehicle according to an embodiment of this application;
FIG. 2 is a diagram of distribution of displays in a vehicle cabin according to an embodiment of this application;
FIG. 3(a)-1 to FIG. 3(c)-2 show a group of graphical user interfaces according to an embodiment of this application;
FIG. 4(a)-1 to FIG. 4(b)-2 show another group of graphical user interfaces according to an embodiment of this application;
FIG. 5(a)-1 to FIG. 5(c)-2 show another group of graphical user interfaces according to an embodiment of this application;
FIG. 6(a) and FIG. 6(b) show another graphical user interface according to an embodiment of this application;
FIG. 7(a)-1 to FIG. 7(c)-2 show another group of graphical user interfaces according to an embodiment of this application;
FIG. 8(a)-1 to FIG. 8(b)-2 show another group of graphical user interfaces according to an embodiment of this application;
FIG. 9(a)-1 to FIG. 9(b)-2 show another group of graphical user interfaces according to an embodiment of this application;
FIG. 10(a)-1 to FIG. 10(b)-2 show another group of graphical user interfaces according to an embodiment of this application;
FIG. 11(a) to FIG. 11(c) show another group of graphical user interfaces according to an embodiment of this application;
FIG. 12(a)-1 to FIG. 12(c)-2 show another group of graphical user interfaces according to an embodiment of this application;
FIG. 13(a), FIG. 13(b)-1, FIG. 13(b)-2, and FIG. 13(c) show another group of graphical user interfaces according to an embodiment of this application;
FIG. 14 is a diagram of a structure of a display system according to an embodiment of this application;
FIG. 15 is a diagram of another structure of a display system according to an embodiment of this application;
FIG. 16 is a diagram of another structure of a display system according to an embodiment of this application;
FIG. 17 is a schematic flowchart of a display method according to an embodiment of this application;
FIG. 18 is a block diagram of a control apparatus according to an embodiment of this application; and
FIG. 19 is a block diagram of a display system according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The prefix words "first", "second", and the like in embodiments of this application are merely intended to distinguish between different objects, and impose no limitation on locations, sequences, priorities, quantities, content, or the like of the described objects. In embodiments of this application, use of a prefix word like an ordinal number for distinguishing a described object does not constitute a limitation on the described object. For a description of the described object, refer to a description of the context in the claims or embodiments. The use of such a prefix word should not constitute a redundant limitation. In addition, in the descriptions of embodiments, unless otherwise specified, "a plurality of" means two or more than two.

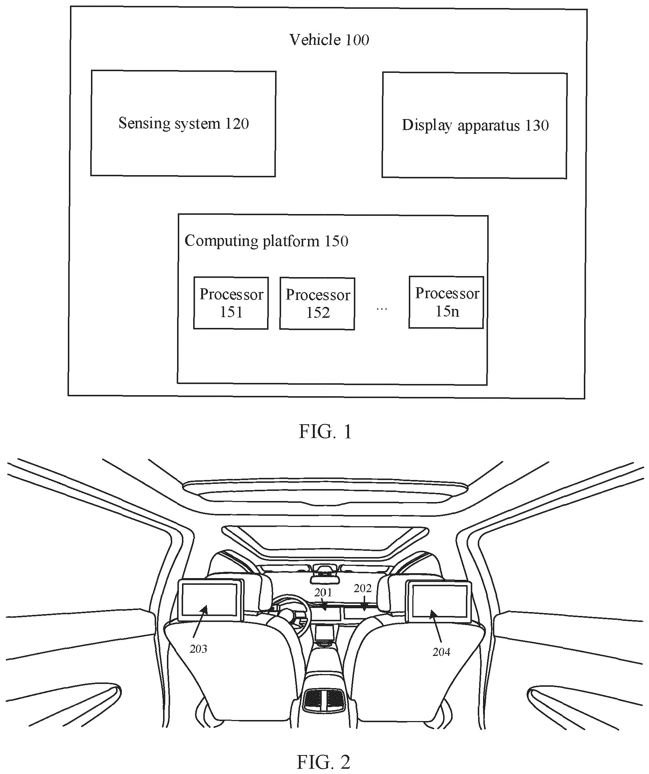

FIG. 1 is a functional block diagram of a vehicle 100 according to an embodiment of this application. The vehicle 100 may include a sensing system 120, a display apparatus 130, and a computing platform 150. The sensing system 120 may include one or more types of sensors that sense surrounding environment information of the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit, for example, a field programmable gate array (field programmable gate array, FPGA), that is implemented by using an application-specific integrated circuit (application-specific integrated circuit, ASIC) or a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The display apparatus 130 in a cabin mainly has two types. The first type is a vehicle-mounted display, and the second type is a projection display, for example, a head up display (head up display, HUD) apparatus. The vehicle-mounted display is a physical display, and is an important part of an in-vehicle infotainment system. A plurality of displays may be disposed in the cabin, for example, a digital instrument display, a central control screen, a display in front of a passenger (also referred to as a front-row passenger) in a front passenger seat, a display in front of a passenger in arear-left seat, and a display in front of a passenger in a rear-right seat. Even, a vehicle window may be used as a display for display. The head-up display is also referred to as a head-up display system. The head-up display is mainly configured to display driving information such as a speed and navigation on a display device (for example, a windshield) in front of a driver, to reduce line-of-sight transfer time of the driver, avoid a pupil change caused by line-of-sight transfer of the driver, and improve driving safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system. It should be understood that the HUD may alternatively be another type of system that emerges with technology evolution. This is not limited in this application.

FIG. 2 is a diagram of an example of distribution of displays in a vehicle cabin according to an embodiment of this application. As shown in FIG. 2, the vehicle cabin may include a display 201 (or may be referred to as a central control screen), a display 202 (or may be referred to as a front passenger entertainment screen), a display 203 (or may be referred to as a second-row left-area entertainment screen), a display 204 (or may be referred to as a second-row right-area entertainment screen), and an instrument screen.

It should be understood that a graphical user interface (graphical user interface, GUI) in the following embodiments is described by using a five-seat vehicle shown in FIG. 2 as an example. Embodiments of this application are not limited thereto. For example, for a seven-seat sport utility vehicle (sport utility vehicle, SUV), a cabin may include a central control screen, a front passenger entertainment screen, a second-row left-area entertainment screen, a second-row right-area entertainment screen, a third-row left-area entertainment screen, and a third-row right-area entertainment screen. For another example, for a passenger vehicle, a cabin may include a front row entertainment screen and a rear row entertainment screen. Alternatively, the cabin may include a driving area display and a passenger area entertainment screen. In an implementation, the passenger area entertainment screen may alternatively be disposed on a top of the cabin.

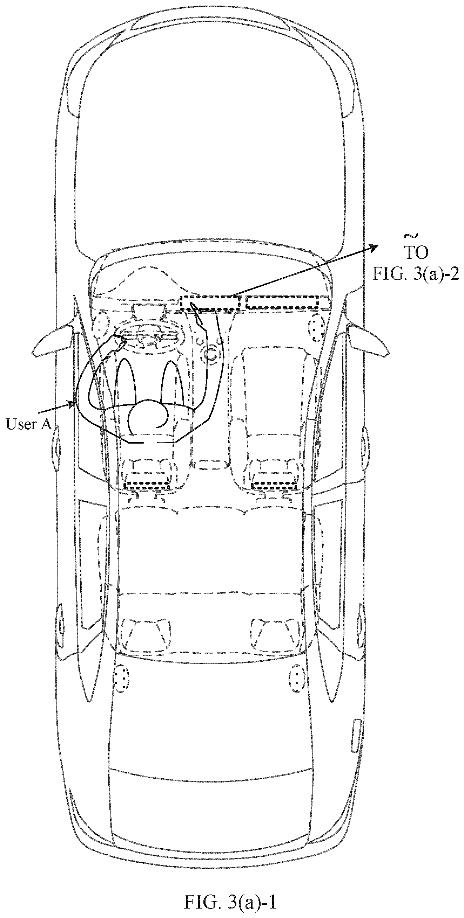

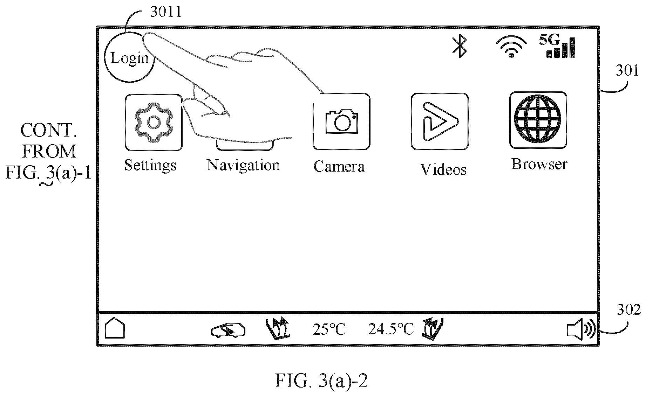

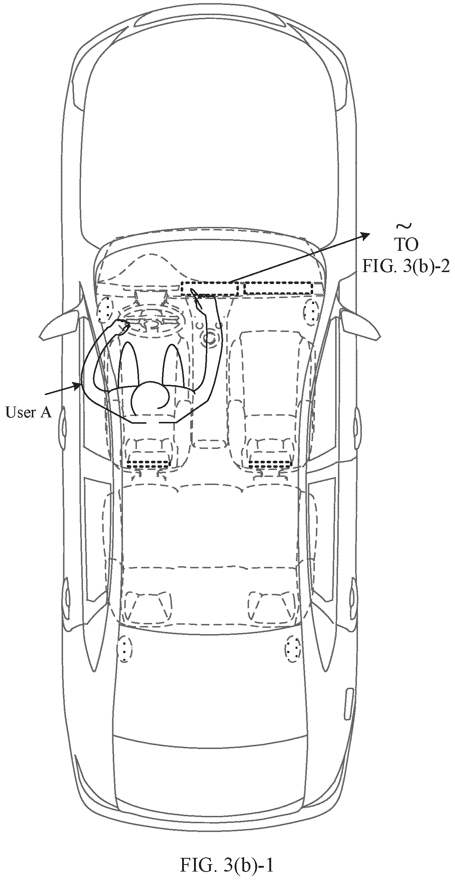

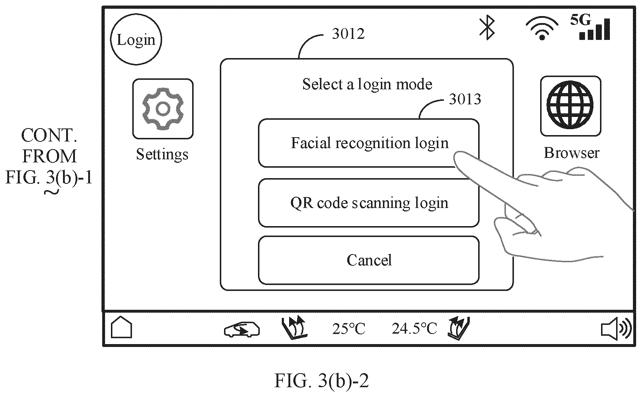

For example, FIG. 3(a)-1 to FIG. 3(c)-2 show a group of graphical user interfaces (graphical user interfaces, GUI) according to an embodiment of this application.

As shown in FIG. 3(a)-1 and FIG. 3(a)-2, a user A is located in a driving area of the vehicle cabin. In this case, the display 201 may display a content display area 301 and a function bar 302. For example, the content display area 301 displays an icon of a settings application, an icon of a navigation application, an icon of a camera application, an icon of a video application, an icon of a browser application, a login control 3011, a Bluetooth function icon, a Wi-Fi function icon, and a cellular network signal icon.

A quantity and types of applications in the content display area 301 are merely examples. Embodiments of this application are not limited thereto. The content display area 301 may further include icons of more or fewer applications, or the content display area 301 may further include an icon of another application. The Bluetooth function icon, the Wi-Fi function icon, and the cellular network signal icon in the content display area 301 are merely examples. Embodiments of this application are not limited thereto. For example, the content display area 301 may alternatively not include the Bluetooth function icon, the Wi-Fi function icon, and the cellular network signal icon, or the content display area 301 includes some of the Bluetooth function icon, the Wi-Fi function icon, and the cellular network signal icon. For another example, some or all of the Bluetooth function icon, the Wi-Fi function icon, and the cellular network signal icon may be displayed based on a setting of a user, or the Bluetooth function icon, the Wi-Fi function icon, and the cellular network signal icon are not displayed.

In an embodiment, the user may set information about applications displayed on the display 201 when a user account is not logged in to on the display 201. For example, the user may further set that the icon of the navigation application and the icon of the settings application are displayed on the display 201 when the user account is not logged in to on the display 201. Alternatively, when the user does not log in to the account on the display 201, the information about applications displayed on the display 201 may be set on the vehicle before delivery.

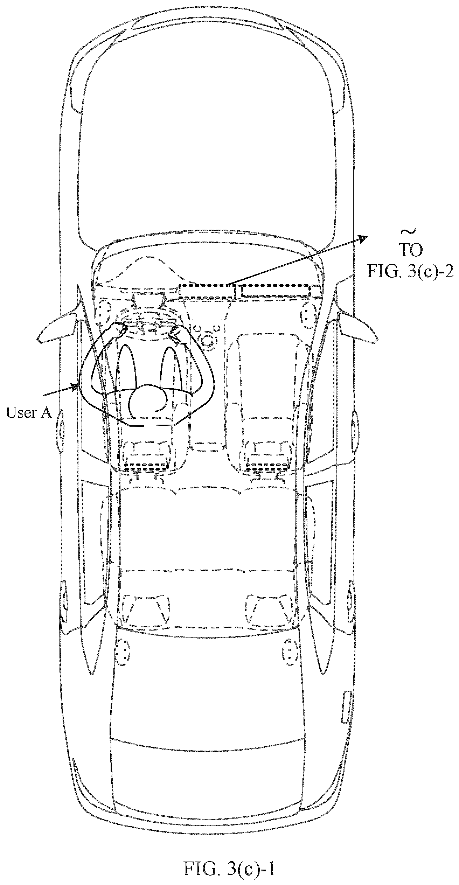

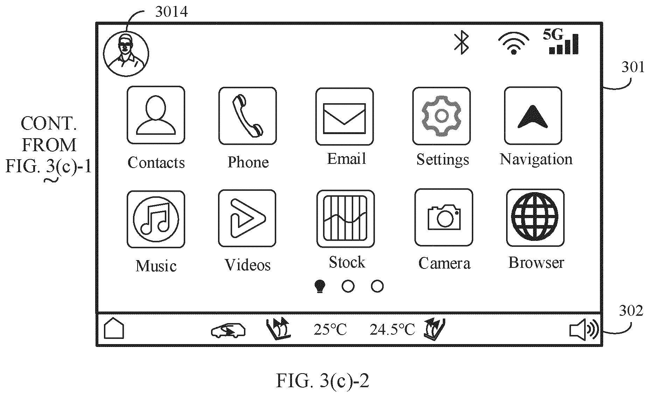

As shown in FIG. 3(b)-1 and FIG. 3(b)-2, when detecting an operation of tapping a control 3011 by the user, the vehicle may display a prompt box 3012. The prompt box 3012 includes prompt information "Select a login mode", a facial recognition login control 3013, a QR code scanning login control, and a cancel control. When the vehicle detects the operation of tapping the control 3013 by the user, the vehicle may perform facial recognition on the user in the driving area by using a camera apparatus in the cabin. The vehicle may match face information in an image collected by the camera apparatus with face information stored in the vehicle. When the face information in the image matches face information of the user A stored in the vehicle, a GUI shown in FIG. 3(c)-2 may be displayed.

As shown in FIG. 3(c)-1 and FIG. 3(c)-2, the vehicle may display, in the content display area 301 of the display 201, information about applications related to the user A. For example, a first tab of three tabs may be displayed in the content display area 301. The first tab may include an icon of a contacts application, an icon of a phone application, an icon of an email application, an icon of a settings application, an icon of a navigation application, an icon of a music application, an icon of a video application, an icon of a stock application, an icon of a camera application, an icon of a browser application, and a profile picture 3014 of the user A.

The applications displayed in the content display area 301 may be local applications of the vehicle associated with the user A, or may be applications on another terminal (for example, a mobile phone) associated with the user A.

In an embodiment, the information that is about the applications related to the user A and that is displayed in the content display area 301 of the vehicle may be preset by the user A, or may be arranged by the vehicle based on frequencies at which the user A uses the applications in a specific time period.

In an embodiment, when there is only one user in the vehicle and the user is located in the driving area, the displays 202 to 204 may be in a screen-off state.

In an embodiment, when detecting that there is a user in the driving area, the vehicle may perform biometric feature recognition on the user. When an obtained biometric feature matches a biometric feature of the user A stored in the vehicle, an account of the user A may be automatically logged in to. In this way, login can be completed without a need for the user to tap a login control on the display and without a need for the user to select a login mode. This improves convenience of logging in to an account by the user in the vehicle, helps improve a degree of intelligence of the vehicle, and therefore, helps improve driving experience of the user.

For example, when detecting that there is a user in the driving area, the vehicle may perform facial recognition on the user in the driving area by using the camera apparatus. If face information in image information collected by using the camera apparatus matches the face information of the user A stored in the vehicle, the account of the user A may be automatically logged in to on the display 201, and the information about the applications associated with the user A is displayed.

For another example, when detecting that there is a user in a front passenger area, the vehicle may perform iris information recognition on the user in the front passenger area by using the camera apparatus. If iris information in image information collected by using the camera apparatus matches iris information of a user B stored in the vehicle, an account of the user B may be automatically log in to on the display 202, and information about applications associated with the user B is displayed.

For another example, when detecting that there is a user in a left area of a second row, the vehicle may recognize, by using a microphone, a voiceprint feature of voice information sent by the user in the left area of the second row. If the voiceprint feature in the voice information collected by using the microphone matches a voiceprint feature of a user C stored in the vehicle, an account of the user C may be automatically logged in to on the display 203, and information about applications associated with the user C is displayed.

In this embodiment of this application, the vehicle may determine an identity of a user in one or more of the foregoing biometric feature recognition manners. For example, when the face information in the image information collected by using the camera apparatus matches the face information of the user A stored in the vehicle, and the iris information in the image information matches iris information of the user A stored in the vehicle, the vehicle may determine that the user is the user A.

The foregoing and the following descriptions about the GUI are merely examples. Embodiments of this application are not limited thereto. For example, the display 201 may display the content display area 301 instead of the function bar 302.

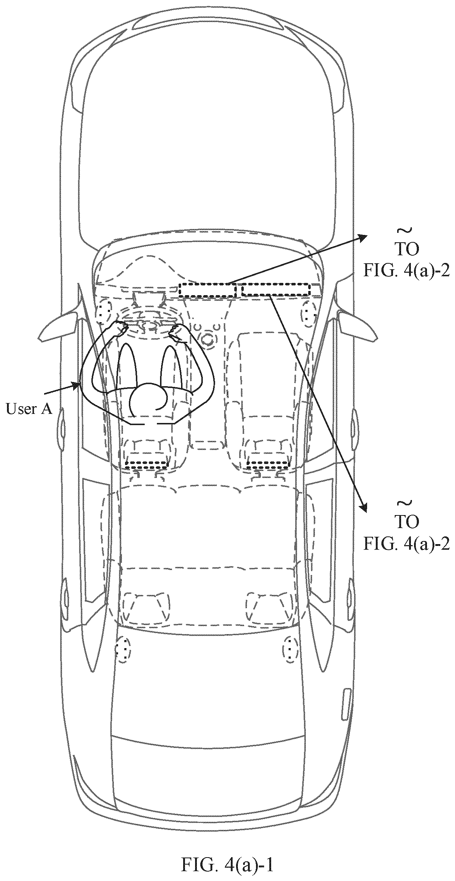

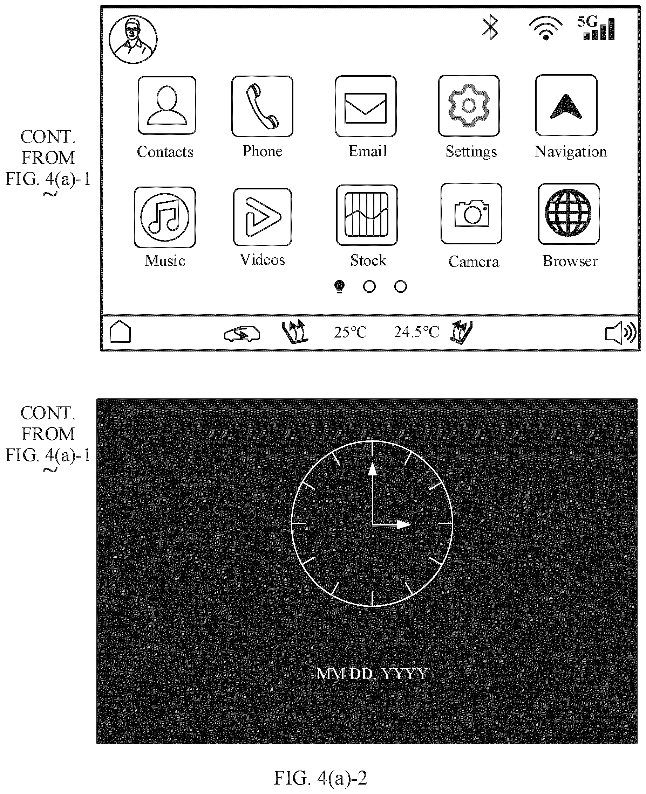

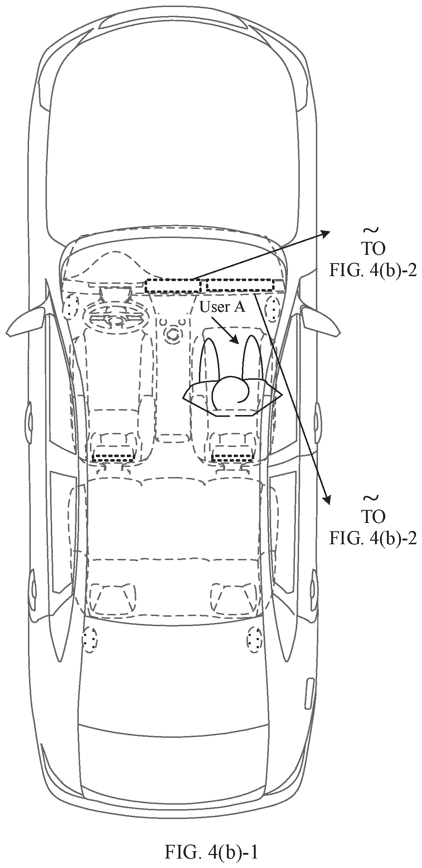

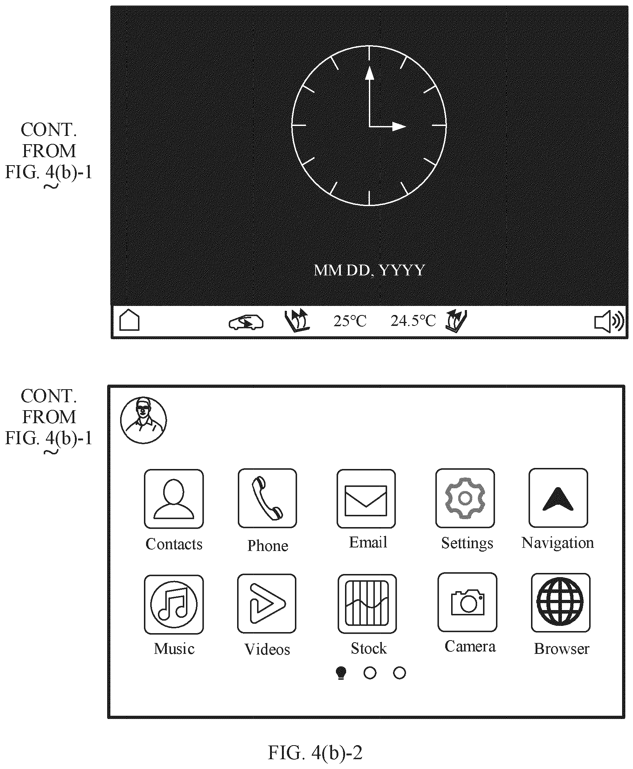

For example, FIG. 4(a)-1 to FIG. 4(b)-2 show a group of GUIs according to an embodiment of this application.

As shown in FIG. 4(a)-1 and FIG. 4(a)-2, the user A is located in the driving area of the vehicle cabin, and the user A logs in to the account of the user A on the display 201. In this case, the information about the applications related to the user A may be displayed on the display 201. If there is no user in the front passenger area of the vehicle, a sleep display interface may be displayed on the display 202.

The sleep display interface in this embodiment of this application is similar to an always on display (always on display, AOD) interface on a terminal device (for example, a mobile phone). After the display is screened off, the vehicle can light up, by using a self-luminescence feature of the display, some areas on the display to display information such as a clock, a date, a notification, and an animation, so that the user can view related information in a screen-off state.

As shown in FIG. 4(b)-1 and FIG. 4(b)-2, in a parking state, the user A moves from the driving area to the front passenger area. When detecting that the user A moves from the driving area to the front passenger area, the vehicle may control the content display area 301 to switch from displaying the information about applications related to the user A to displaying information about time and a date. In addition, the vehicle may control the display 202 to switch from displaying the information about time and a date to displaying the information about the applications related to the user A.

In an embodiment, when detecting that the user A moves from the driving area to the front passenger area, the vehicle may alternatively control the display 201 to be screened off.

In an embodiment, that the vehicle detects that the user A moves from the driving area to the front passenger area includes: The vehicle detects that the user A moves from the driving area to the front passenger area and duration in which the user A is located in the front passenger area is greater than or equal to preset duration.

In an embodiment, when detecting that the user A moves from the driving area to the left area of the second row, the vehicle may control the content display area 301 to switch from displaying the information about the applications related to the user A to displaying the information about time and a date. In addition, the vehicle controls the display 203 to display the information about the applications related to the user A.

In an embodiment, when detecting that the user A moves from the driving area to a right area of the second row, the vehicle may control the content display area 301 to switch from displaying the information about the applications related to the user A to displaying the information about time and a date. In addition, the vehicle controls the display 204 to display the information about the applications related to the user A.

In this embodiment of this application, after detecting that the user moves from the driving area to the front passenger area in the vehicle cabin, the vehicle may switch from displaying, on the display in the driver area, an interface element related to the user to displaying, on the display in the front passenger area, the interface element related to the user. This helps the user view, after area switching, the interface element related to the user, thereby helping improve driving experience of the user.

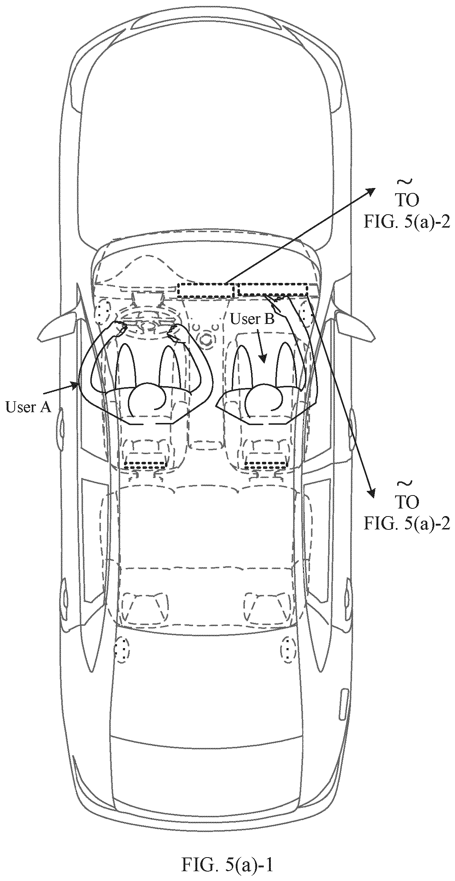

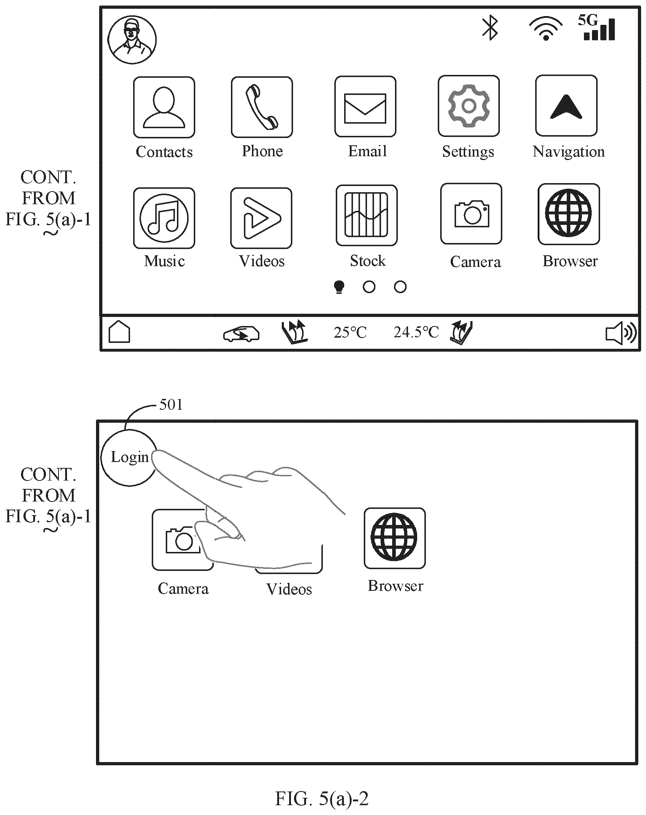

For example, FIG. 5(a)-1 to FIG. 5(c)-2 show a group of GUIs according to an embodiment of this application.

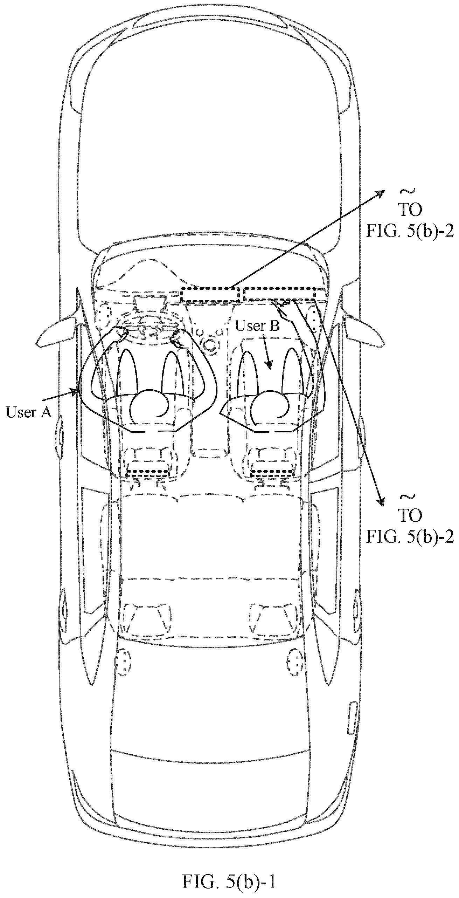

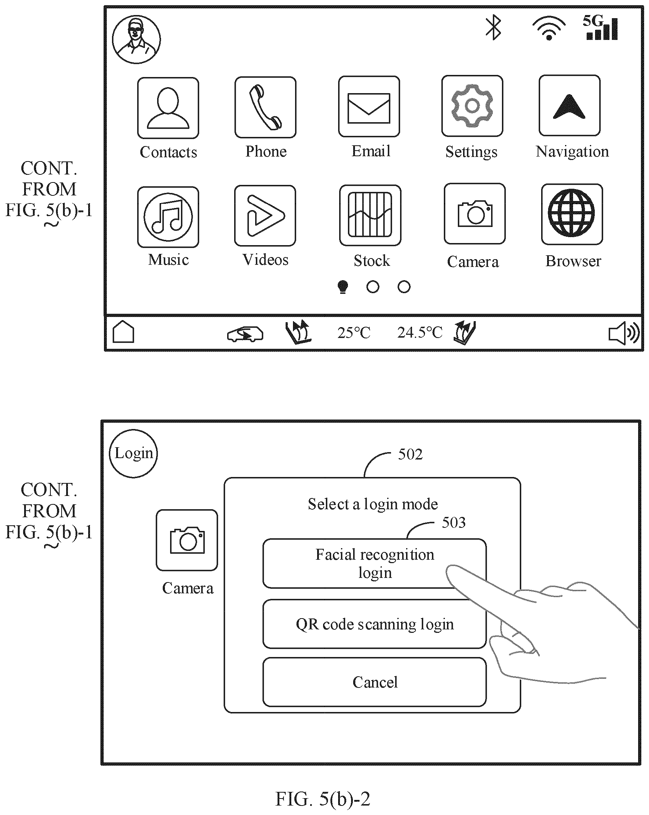

As shown in FIG. 5(a)-1 and FIG. 5(a)-2, the user A is located in the driving area, and the user A logs in to the account of the user A on the display 201. The user B is located in the front passenger area, and the user B has not logged in to the account of the user B on the display 202. In this case, the vehicle may display, on the display 201, the information about the applications related to the user A, and display an icon of a camera application, an icon of a video application, an icon of a browser, and a login control 501 on the display 202. When detecting an operation of tapping the control 501 by the user, the vehicle may display a GUI shown in FIG. 5(b)-2.

In an embodiment, when the user does not log in to the account on the display 202, the information about applications displayed on the display 202 may be preset by the user, or may be set on the vehicle before delivery.

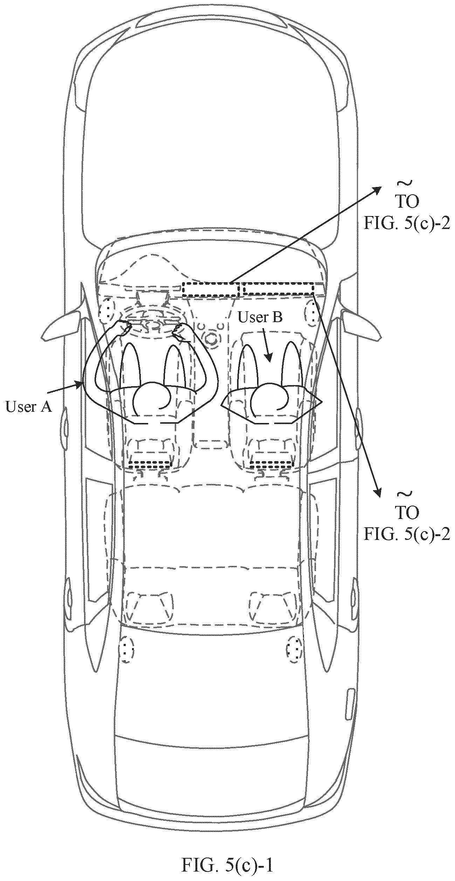

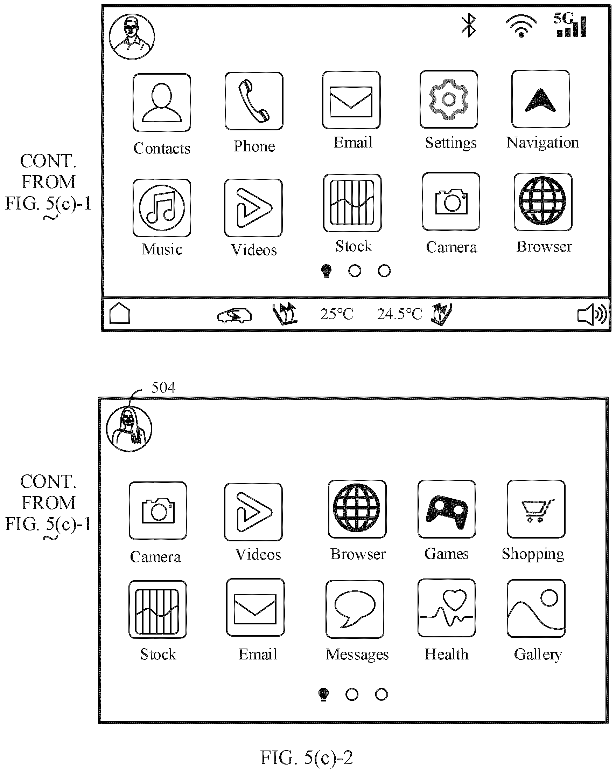

As shown in FIG. 5(b)-1 and FIG. 5(b)-2, in response to detecting the operation of tapping the control 501 by the user, the vehicle may display a prompt box 502 on the display 202. The prompt box 502 includes prompt information "Select a login mode", a facial recognition login control 503, a QR code scanning login control, and a cancel control. When the vehicle detects the operation of tapping the control 503 by the user, the vehicle may perform facial recognition on the user in the front passenger area by using a camera apparatus in the cabin. The vehicle may match face information in an image collected by the camera apparatus with face information stored in the vehicle. When the face information in the image matches face information of the user B stored in the vehicle, a GUI shown in FIG. 5(c)-2 may be displayed.

As shown in FIG. 5(c)-1 and FIG. 5(c)-2, the vehicle may display, on the display 202, information about applications related to the user B. For example, a first tab of three tabs can be displayed. The first tab may include an icon of a camera application, an icon of a video application, an icon of a browser application, an icon of a games application, an icon of a shopping application, an icon of a stock application, an icon of an email application, an icon of a messages application, an icon of Health, an icon of Gallery, and a profile picture 504 of the user B.

In an embodiment, the information that is about the applications related to the user B and that is displayed on the display 202 of the vehicle may be preset by the user B, or may be arranged by the vehicle based on frequencies at which the user B uses the applications in a specific time period.

In an embodiment, when detecting that there is a user in the front passenger area, the vehicle may perform biometric feature recognition on the user. When an obtained biometric feature matches a biometric feature of the user B stored in the vehicle, an account of the user B may be automatically logged in to. In this way, login can be completed without a need for the user to tap a login control on the display and without a need for the user to select a login mode. This improves convenience of logging in to an account by the user in the vehicle, and therefore, helps improve driving experience of the user.

In this embodiment of this application, when there are a plurality of users in the vehicle, each user may separately log in to an account of the user on a display of an area corresponding to the user, to display an interface element related to the user on the display of the area. This facilitates the user to view, on the display of the area in which the user is located, an interface element that the user likes or expects to see, thereby helping improve driving experience of the user.

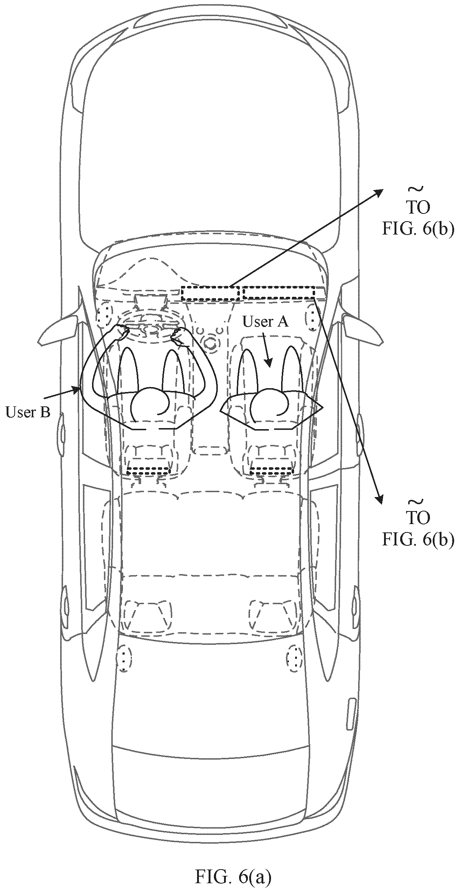

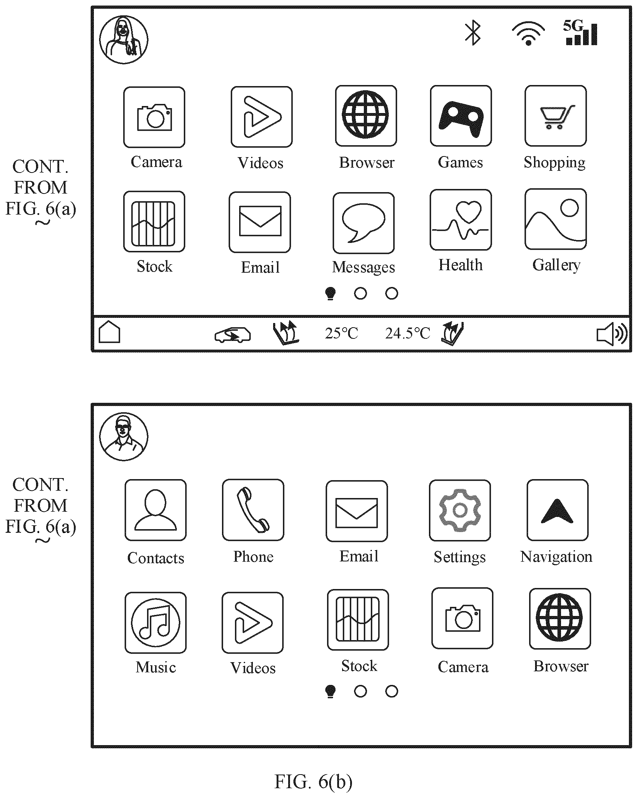

For example, FIG. 6(a) and FIG. 6(b) show another GUI according to an embodiment of this application.

As shown in FIG. 6(a) and FIG. 6(b), when it is detected that the user A is located in the front passenger area and the user B is located in the driving area, the content display area 301 may be controlled to switch from displaying information about the applications related to the user A and the profile picture of the user A to displaying information about the applications related to the user B and the profile picture of the user B. In addition, the display 202 may be further controlled to switch from displaying the information about the applications related to the user B and the profile picture of the user B to displaying the information about the applications related to user A and the profile picture of the user A.

In this way, after detecting that the user A and the user B exchange areas, the vehicle may display an interface element related to the user on a display of a corresponding area, and the user does not need to manually switch an account on the corresponding display. This helps improve a degree of intelligence of the vehicle, and also helps improve driving experience of the user.

In an embodiment, a Bluetooth function icon, a Wi-Fi function icon, a cellular network signal icon, and a function bar that are displayed on the display 201 may be fixed, and the information may not change with a change of identity information of the user, or may not change with a change of a location of the user. Alternatively, a Bluetooth function icon, a Wi-Fi function icon, a cellular network signal icon, and a function bar that are displayed on the display 201 may be set by the user A. When a location of the user A moves from the driving area to the front passenger area, the Bluetooth function icon, the Wi-Fi function icon, the cellular network signal icon, and the function bar may not be displayed on the display 201, and the Bluetooth function icon, the Wi-Fi function icon, the cellular network signal icon, and the function bar may be displayed on the display 202.

In an embodiment, after detecting that the user A moves from the driving area to the front passenger area, the vehicle may continue detecting a line-of-sight direction of the user by using a camera or an eye tracker. If the line-of-sight direction of the user is not on the display 202, the display 202 may be controlled to enter a screen-off state. If the line-of-sight direction of the user is on the display 202, time and a date may be displayed on the display 202 by using an AOD function. When a tap operation of the user at any location on the display 202 is detected, the applications related to the user A and the profile picture of the user A may be displayed.

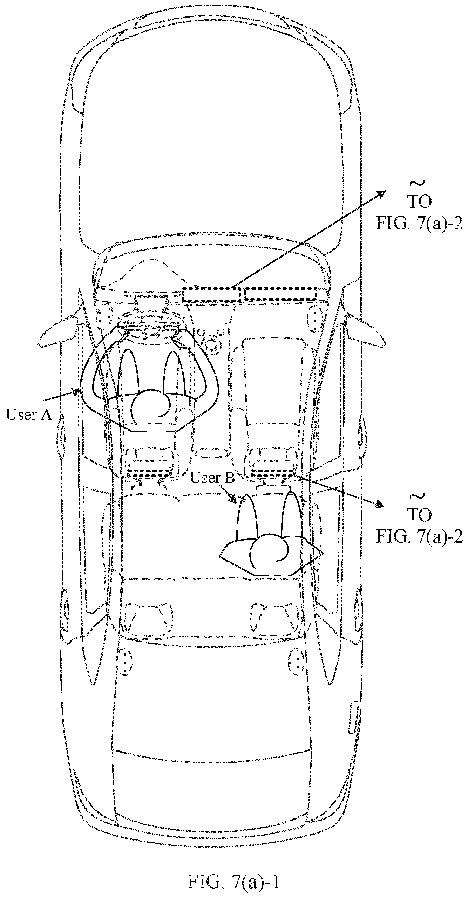

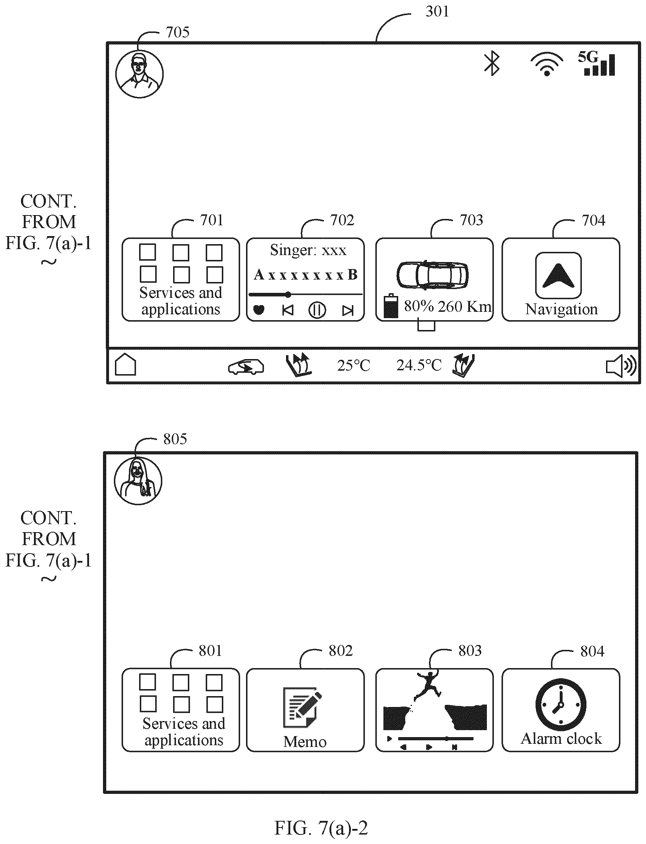

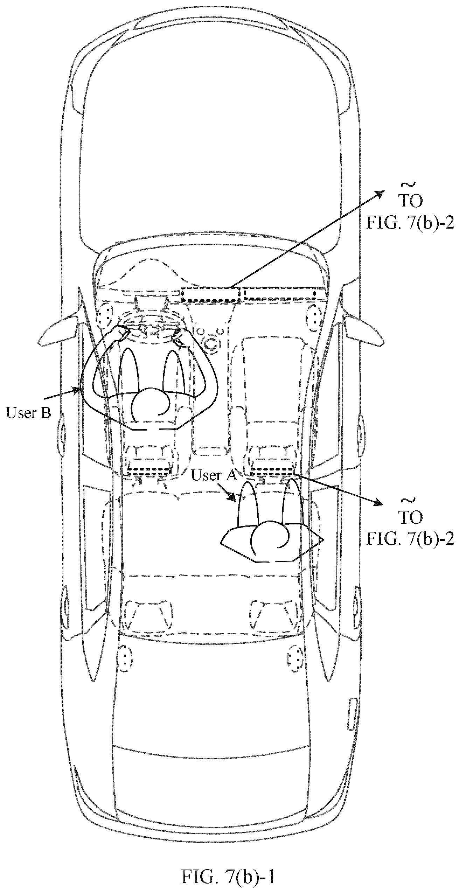

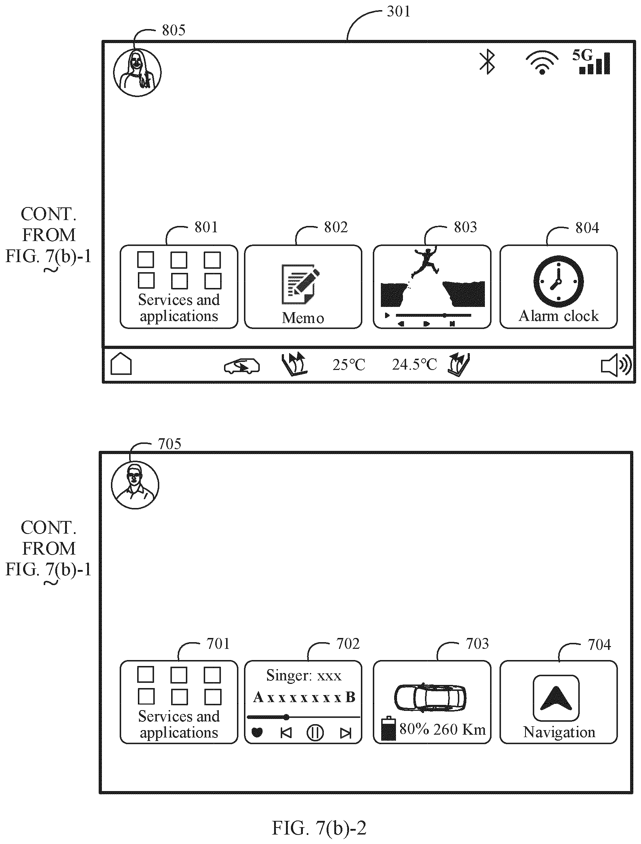

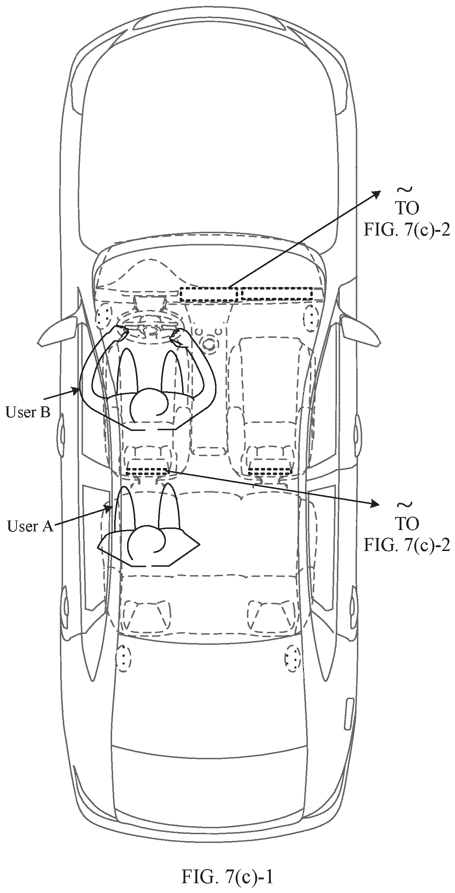

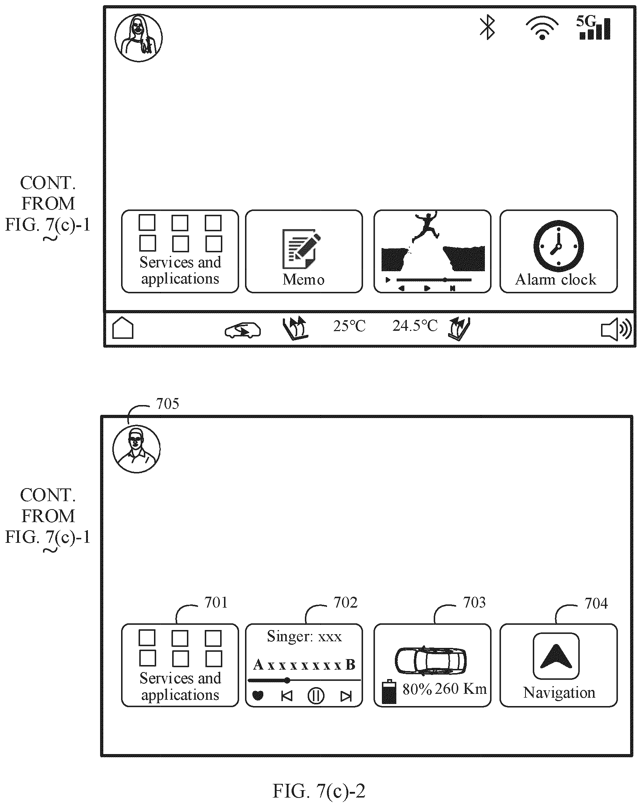

On the GUIs shown in FIG. 3(a)-1 to FIG. 3(c)-2 to FIG. 6(a) and FIG. 6(b), an example in which display content related to the user is an icon of an application is used. The display content related to the user may alternatively be content like a card, a wallpaper, or an animation. For example, FIG. 7(a)-1 to FIG. 7(c)-2 show another group of GUIs according to an embodiment of this application.

As shown in FIG. 7(a)-1 and FIG. 7(a)-2, the user A is located in the driving area, and the user A logs in to the account of the user A on the display 201. The user B is located in the right area of the second row, and the user B logs in to the account of the user B on the display 204. In this case, the vehicle may display, on the display 201, a card 701 corresponding to services and applications, a card 702 corresponding to a vehicle-mounted music application, a card 703 corresponding to remaining power and remaining driving mileage of the vehicle, a card 704 corresponding to a vehicle 360 degrees (°) surround view function, and information about a profile picture 705 of the user A. In addition, the vehicle may also display, on the display 204, a card 801 corresponding to services and applications, a card 802 corresponding to a memo, a card 803 corresponding to a video application, a card 804 corresponding to an alarm clock, and information about a profile picture 805 of the user B.

The cards may be associated with some applications installed on the vehicle. For example, the card 702 may be associated with the vehicle-mounted music application. A singer name corresponding to a piece of music, lyric information, a play progress bar, a like control, a control for switching to play a previous piece of music, a temporary/play control, a control for switching to play a next piece of music, and the like may be displayed on the card 702. When the vehicle detects an operation of tapping the card 702 by the user, the vehicle may display a display interface of the vehicle-mounted music application on the content display area 301.

Text information (for example, the singer name and the lyric information) and control information (for example, the play progress bar and the like control) displayed on the card 702 may be set by the user. For example, the user may further set that only two pieces of information, namely, the lyric information and the play progress bar, are displayed on the card 702.

The text information and the control information may be displayed on the card 702, or only an icon of an application may be displayed on the card 702. For example, only an icon of the vehicle-mounted music application may be displayed on the card 702.

The card may also be associated with some local functions of the vehicle. For example, the card 703 may be associated with information about remaining power of the vehicle and an endurance mileage corresponding to the remaining power. When the vehicle detects an operation of tapping the card 703 by the user, the vehicle may display, on the content display area 301, a display interface of the remaining power of the vehicle and the endurance mileage corresponding to the remaining power. For another example, the card 704 may be associated with a 360 degrees surround view function of the vehicle. When the vehicle detects an operation of tapping the card 704 by the user, the vehicle may display a display interface of the 360 degrees surround view function on the content display area 301.

The card may further be associated with a display interface of some functions of an application. For example, the card may be associated with a payment function in a payment application. When detecting that the user taps the card, the vehicle may not display a home page of the payment application, but directly display a display interface related to the payment function in the payment application.

The card may further be associated with a display list of a plurality of applications. For example, the card 701 may be associated with a display list of a plurality of applications. When the vehicle detects an operation of tapping the card 701 by the user, the vehicle may display, on the content display area 301, a GUI shown in FIG. 3(c)-2.

The cards 701 to 704 that are related to the user A and that are displayed in the content display area 301 of the vehicle may be preset by the user A, or may be arranged by the vehicle based on frequencies at which the user A uses the cards in a specific time period.

The cards 801 to 804 that are related to the user B and that are displayed on the display 204 of the vehicle may be preset by the user B, or may be arranged by the vehicle based on frequencies at which the user B uses the cards in a specific time period.

As shown in FIG. 7(b)-1 and FIG. 7(b)-2, when the vehicle detects that the user A is located in the right area of the second row and the user B is located in the driving area, the vehicle may display, on the display 201, the cards 801 to 804 and the profile picture 805 that are related to the user B. In addition, the vehicle may further display, on the display 204, the cards 701 to 704 and the profile picture 705 that are related to the user A.

As shown in FIG. 7(c)-1 and FIG. 7(c)-2, when detecting that the user A moves from the right area of the second row to the left area of the second row, the vehicle may display, on the display 203, the cards 701 to 704 and the profile picture 705 that are related to the user A.

In an embodiment, when detecting that the user A moves from the right area of the second row to the left area of the second row, the vehicle may control the display 204 to be in a screen-off state or display information about time and a date by using an AOD function.

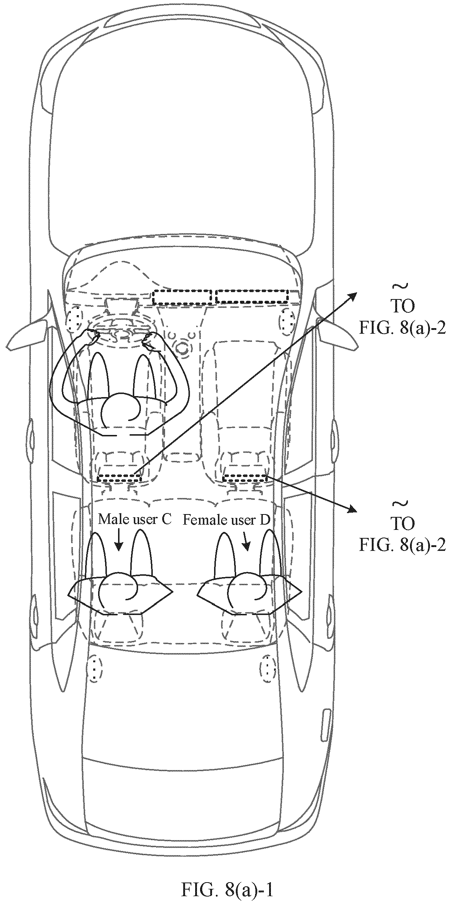

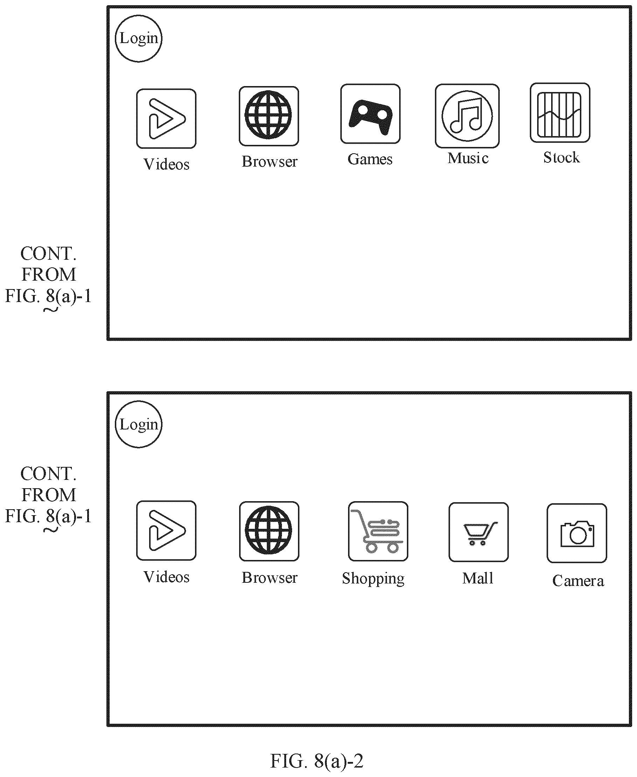

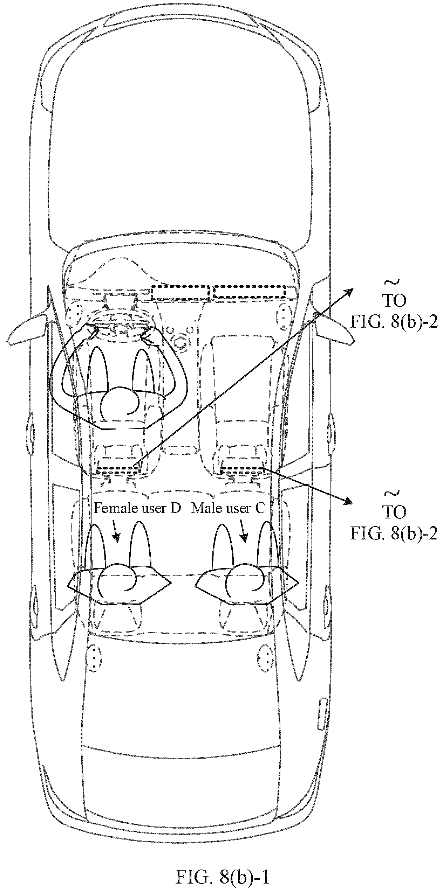

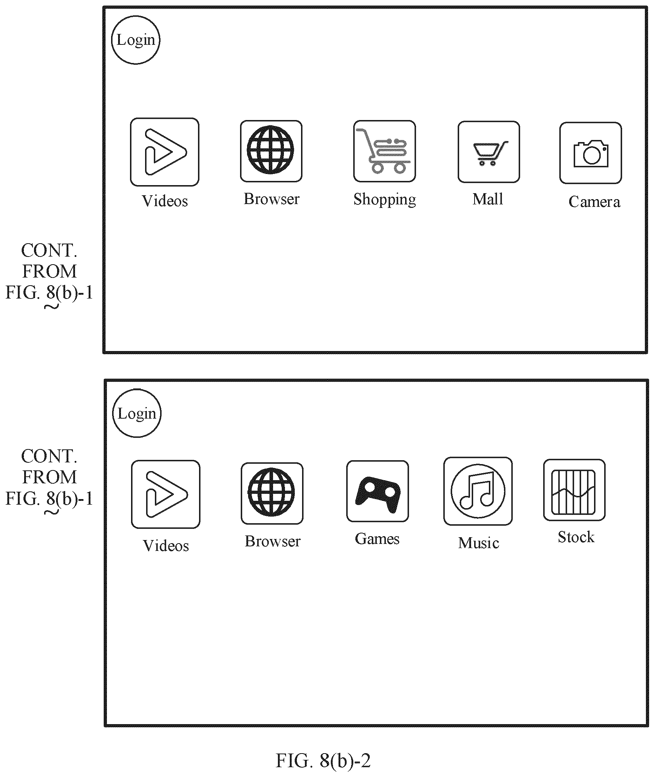

For example, FIG. 8(a)-1 to FIG. 8(b)-2 show another group of GUIs according to an embodiment of this application.

As shown in FIG. 8(a)-1 and FIG. 8(a)-2, a user C and a user D are respectively located in the left area of the second row and the right area of the second row. The user C does not log in to an account of the user C on the display 203, and the user D does not log in to an account of the user D on the display 204. When recognizing that the user C in the left area of the second row is a male user, the vehicle may display, on the display 203, information about some male-preferred applications. For example, an icon of a video application, an icon of a browser, an icon of a games application, an icon of a music application, and an icon of a stock application are displayed on the display 203. When recognizing that the user D in the right area of the second row is a female user, the vehicle may display, on the display 204, information about some female-preferred applications. For example, an icon of a video application, an icon of a browser, an icon of a shopping application, an icon of a mall application, and an icon of a camera application are displayed on the display 204.

In this embodiment of this application, when the user does not log in to the account on the display in the area in which the user is located, the vehicle may automatically recommend, to the user based on a feature of the user, information about some applications that the user may prefer, for example, recommend information about different applications to users of different genders. This helps improve driving experience of the user.

As shown in FIG. 8(b)-1 and FIG. 8(b)-2, when detecting that the user C is located in the right area of the second row and the user D is located in the left area of the second row, the vehicle may display, on the display 203, information about some female-preferred applications. In addition, the vehicle may display, on the display 204, information about some male-preferred applications.

In FIG.8(a)-1 to FIG. 8(b)-2, when detecting users of different genders, the vehicle recommends information about different applications to the users of different genders. The vehicle may further recommend information about different applications to users of different ages based on ages of the users.

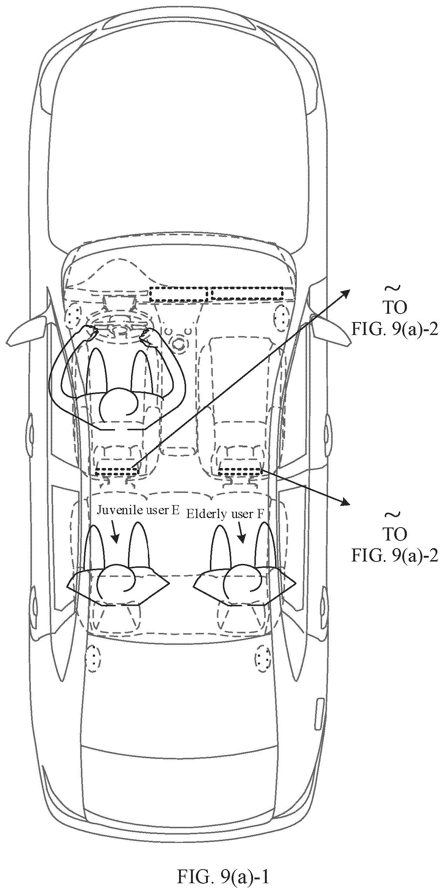

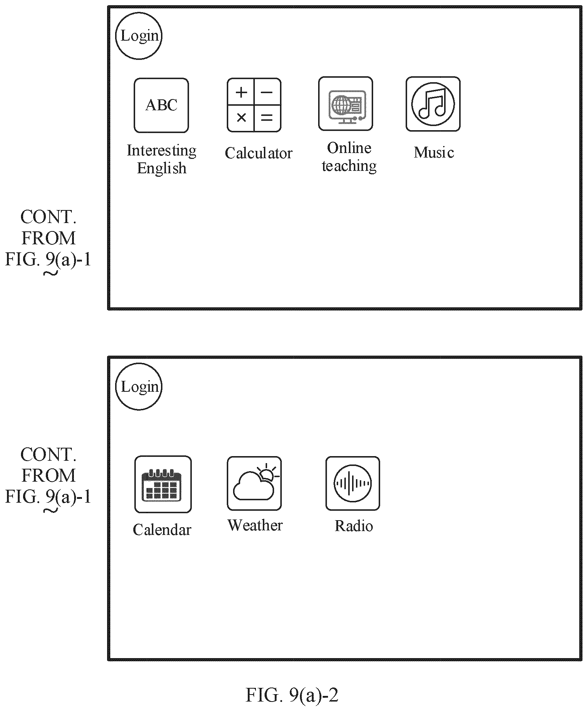

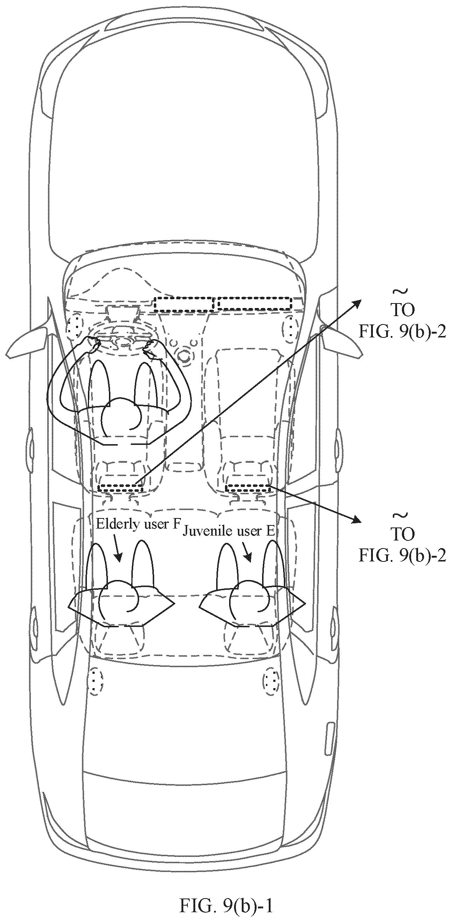

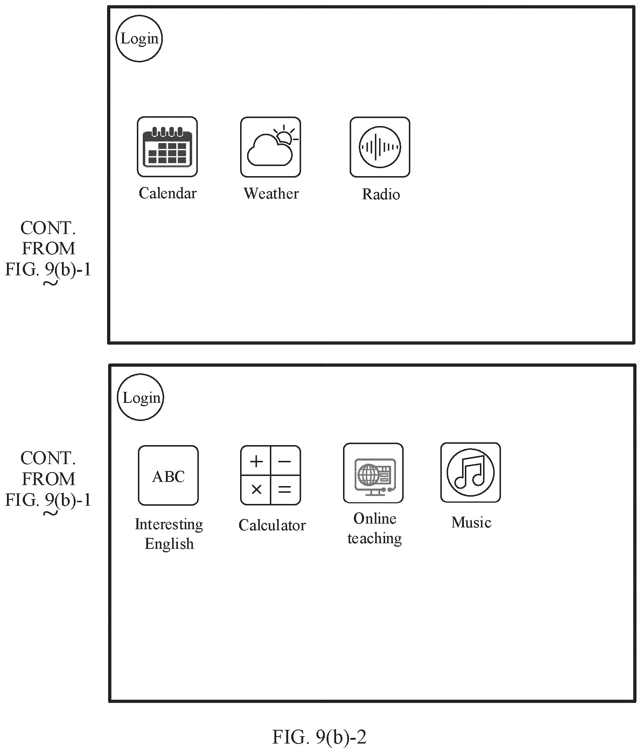

For example, FIG. 9(a)-1 to FIG. 9(b)-2 show another group of GUIs according to an embodiment of this application.

As shown in FIG. 9(a)-1 and FIG. 9(a)-2, a user E and a user F are respectively located in the left area of the second row and the right area of the second row. The user E does not log in to an account of the user E on the display 203, and the user F does not log in to an account of the user F on the display 204. When recognizing that the user E in the left area of the second row is a juvenile user, the vehicle may display, on the display 203, information about some applications preferred by the juvenile user. For example, an icon of an interesting English application, an icon of a calculator, an icon of an online teaching application, and an icon of a music application are displayed on the display 203. When recognizing that the user F in the right area of the second row is an elderly user, the vehicle may display, on the display 204, information about some applications preferred by the elderly user. For example, an icon of a calendar, an icon of weather, and an icon of a radio are displayed on the display 204.

In this embodiment of this application, when the user does not log in to the account on the display in the area in which the user is located, the vehicle may automatically recommend, to the user based on a feature of the user, information about some applications that the user may prefer, for example, recommend information about different applications to users of different ages. This helps improve driving experience of the user.

As shown in FIG. 9(b)-1 and FIG. 9(b)-2, when detecting that the user E is located in the right area of the second row and the user F is located in the left area of the second row, the vehicle may display, on the display 203, information about some applications preferred by the elderly user. In addition, the vehicle may display, on the display 204, information about some applications preferred by the juvenile user.

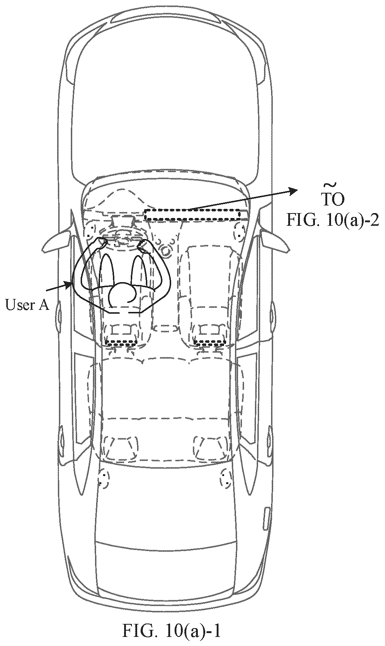

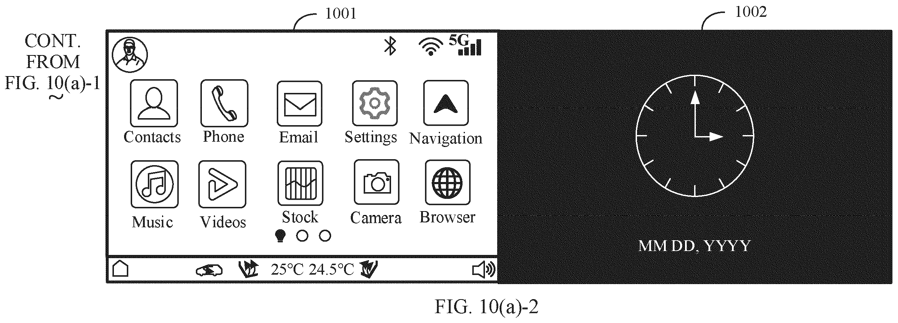

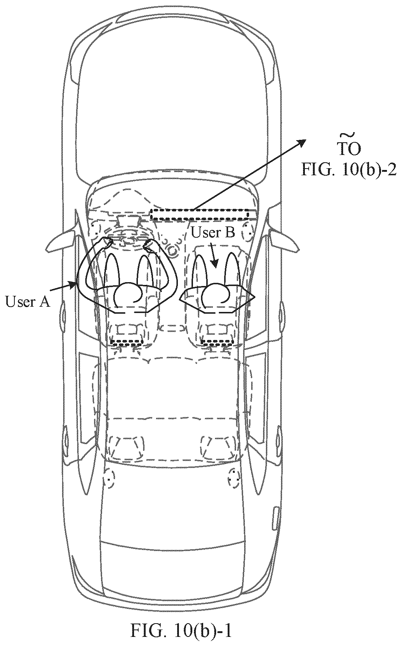

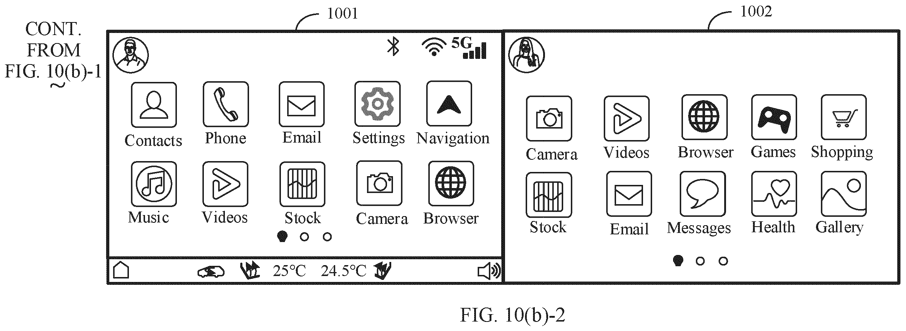

In the foregoing embodiment, an example in which the display 201 and the display 202 are two independent displays is used for description. For example, with reference to a GUI shown in FIG. 10(a)-1 to FIG. 10(b)-2, the following describes a process of performing display by using a long connected screen.

As shown in FIG. 10(a)-1 and FIG. 10(a)-2, a central control screen and a front passenger entertainment screen in a cabin of a vehicle may be a same screen. The screen may be divided into two display areas: the area 1001 and the area 1002 respectively. The area 1001 may be a display area close to the driving area, and the area 1002 is a display area close to the front passenger area. A user A is located in the driving area. When detecting that a user in the driving area is the user A, the vehicle may display, in the area 1001, information about applications related to the user A. For example, a first tab of three tabs may be displayed in the area 1001. The first tab may include an icon of a contacts application, an icon of a phone application, an icon of an email application, an icon of a settings application, an icon of a navigation application, an icon of a music application, an icon of a video application, an icon of a stock application, an icon of a camera application, an icon of a browser application, and a profile picture of the user A. Because no user is detected in the front passenger area, information about time and a date may be displayed in the area 1002 by using an AOD function.

As shown in FIG. 10(b)-1 and FIG. 10(b)-2, when detecting that there is a user in the front passenger area and determines that the user is a user B, the vehicle may control the area 1002 to switch from displaying the information about time and a date to displaying information about applications related to the user B. For example, a first tab of three tabs may be displayed in the area 1002. The first tab may include an icon of a camera application, an icon of a video application, an icon of a browser application, an icon of a games application, an icon of a shopping application, an icon of a stock application, an icon of an email application, an icon of a messages application, an icon of Health, an icon of Gallery, and a profile picture of the user B.

In an embodiment, after the user A and the user B change locations, the vehicle may display, in the area 1001, the information about the applications related to the user B, and display, in the area 1002, the information about the applications related to the user A.

In an embodiment, a Bluetooth function icon, a Wi-Fi function icon, a cellular network signal icon, and a function bar that are in the area 1001 may be fixed, and the information may not change with a change of identity information of the user, or may not change with a change of a location of the user. Alternatively, a Bluetooth function icon, a Wi-Fi function icon, a cellular network signal icon, and a function bar that are in the area 1001 may be set by the user A. When a location of the user A moves from the driving area to the front passenger area, the Bluetooth function icon, the Wi-Fi function icon, the cellular network signal icon, and the function bar may not be displayed in the area 1001, and the Bluetooth function icon, the Wi-Fi function icon, the cellular network signal icon, and the function bar may be displayed in the area 1002.

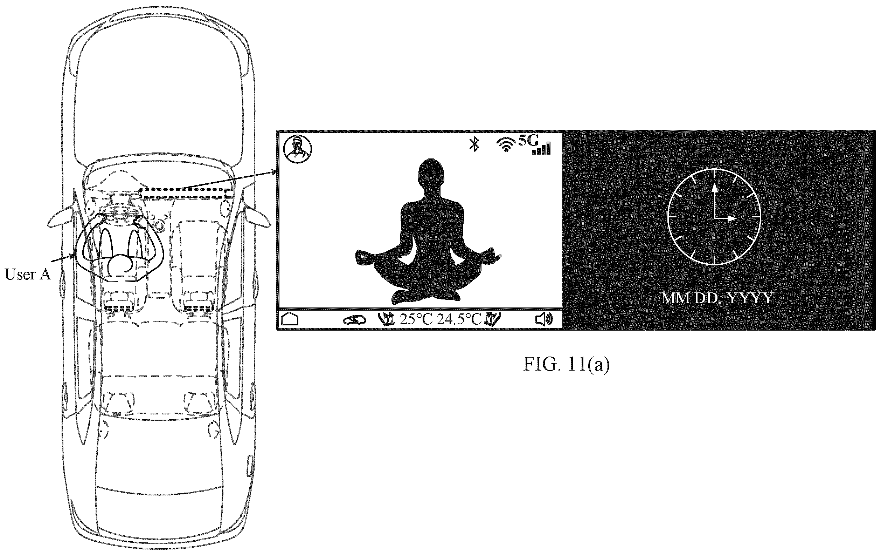

For example, FIG. 11(a) to FIG. 11(c) show another group of GUIs according to an embodiment of this application.

As shown in FIG. 11(a), when detecting that the user in the driving area is the user A, the vehicle may display, in the area 1001, a wallpaper related to the user A and a profile picture of the user A. Because no user is detected in the front passenger area, time and a date may be displayed in the area 1002 by using an AOD function.

In an embodiment, when a tapping operation of the user in the area 1001 is detected, the information about the applications related to the user A or information about a card related to the user A may be displayed in the area 1001.

In an embodiment, the wallpaper related to the user A may be set by the user A, or may be a wallpaper that is detected by the vehicle to be most frequently used by the user A in a specific time period.

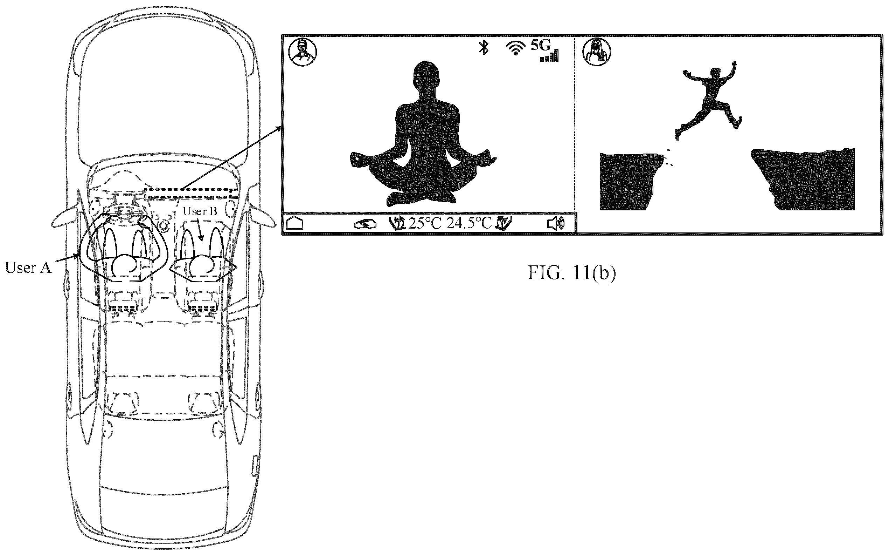

As shown in FIG. 11(b), when it is detected that there is a user in the front passenger area and it is determined that the user is the user B, the area 1002 may be controlled to switch from displaying information about time and a date to displaying a wallpaper related to the user B and a profile picture of the user B.

In an embodiment, the wallpaper related to the user B may be set by the user B, or may be a wallpaper that is detected by the vehicle to be most frequently used by the user B in a specific time period.

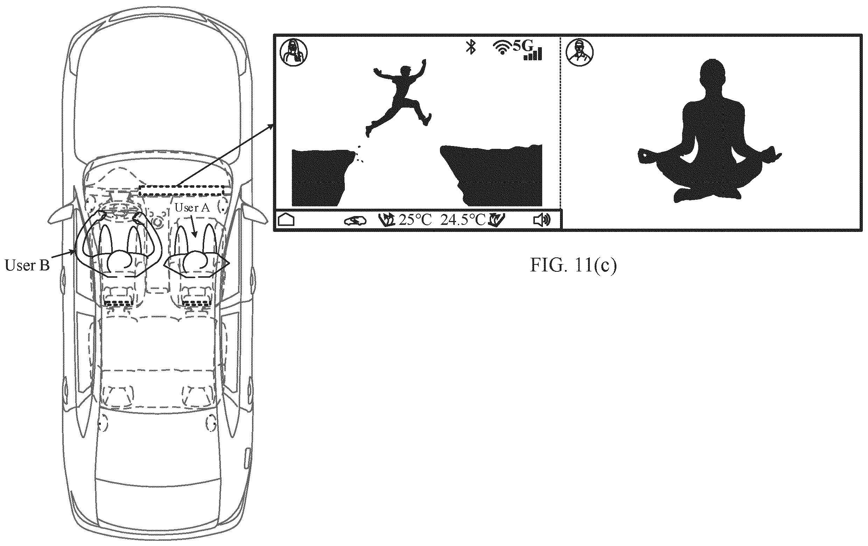

As shown in FIG. 11(c), after detecting that the user A and the user B change locations, the vehicle may control the area 1001 to switch from displaying the wallpaper related to the user A and the profile picture of the user A to displaying the wallpaper related to the user B and the profile picture of the user B. In addition, the vehicle may control the area 1002 to switch from displaying the wallpaper related to the user B and the profile picture of the user B to displaying the wallpaper related to the user A and the profile picture of the user A.

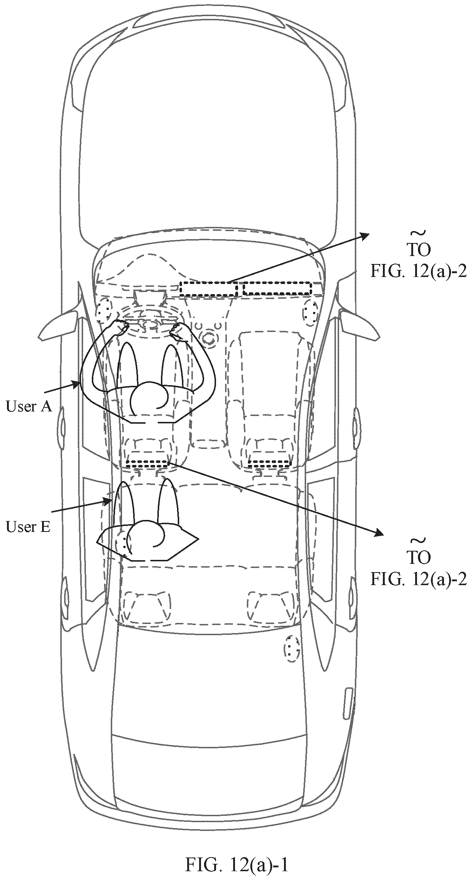

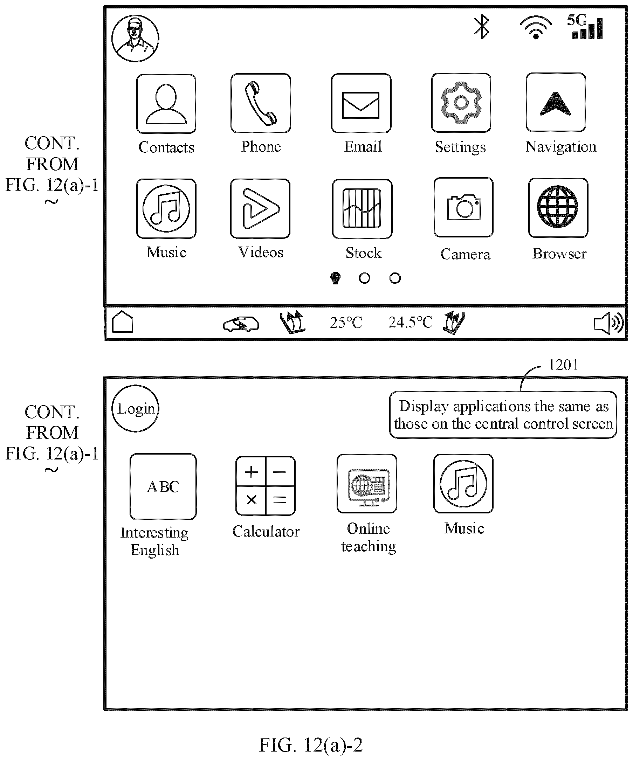

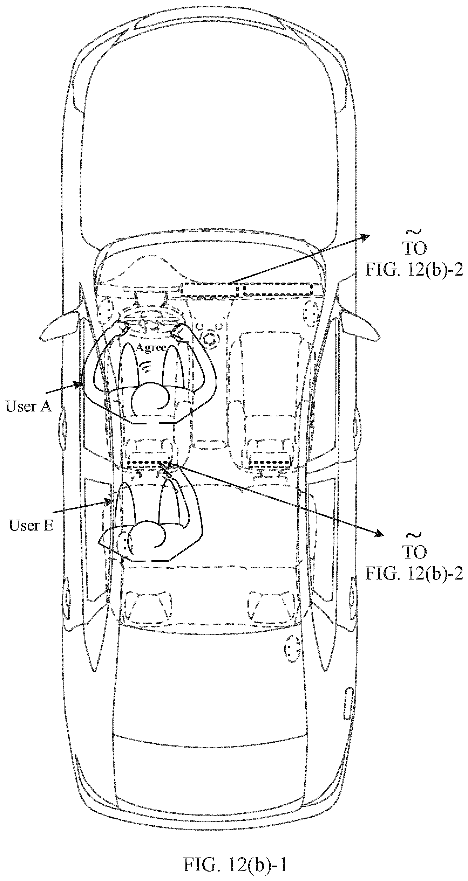

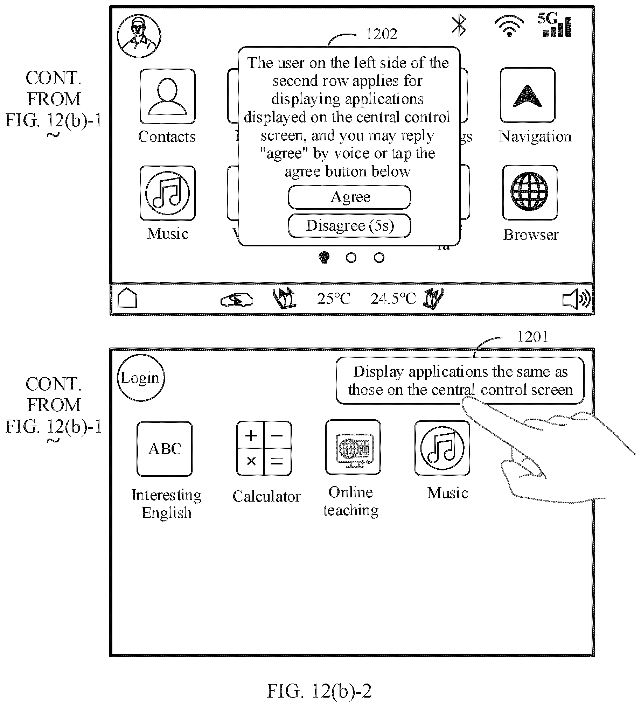

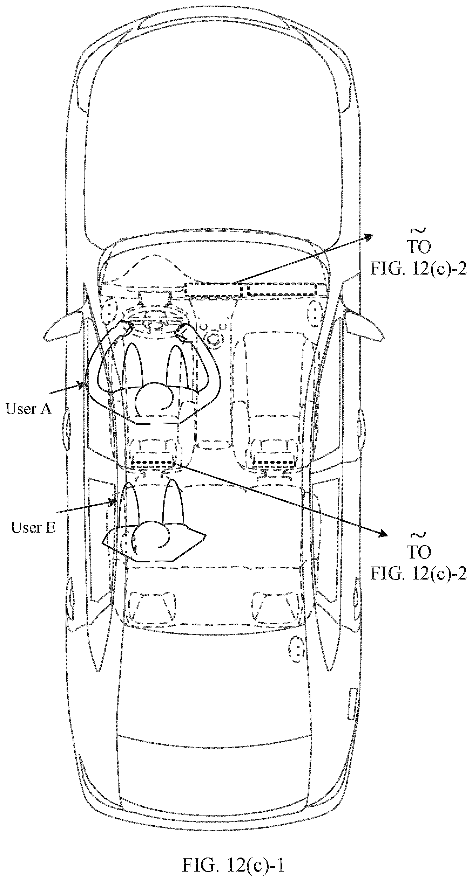

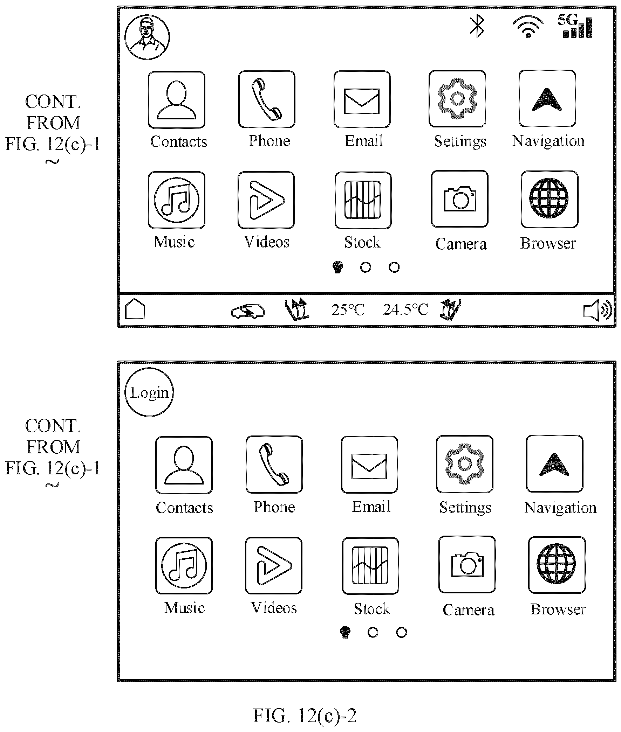

For example, FIG. 12(a)-1 to FIG. 12(c)-2 show another group of GUIs according to an embodiment of this application.

As shown in FIG. 12(a)-1 and FIG. 12(a)-2, when it is detected that the user in the driving area is the user A, the information about the applications related to the user A and the profile picture of the user A may be displayed in a content display area 301 of the display 201. When it is detected that there is a user in a left area of a second row and no information related to the user is stored in the vehicle, the display 203 may be controlled, based on an age of the user E, to switch from displaying an icon of interesting English, an icon of a calculator, an icon of online teaching, and an icon of a music application to displaying a control 1201 of displaying applications the same as those on the central control screen.

As shown in FIG. 12(b)-1 and FIG. 12(b)-2, when an operation of tapping the control 1201 by the user is detected, a prompt box 1202, an agree control, and a disagree control may be displayed on the display 201. The prompt box 1202 may include prompt information "The user on the left side of the second row applies for displaying applications displayed on the central control screen, and you may reply 'agree' by voice or tap the agree button below".

As shown in FIG. 12(c)-1 and FIG. 12(c)-2, when the vehicle detects, by using a microphone, voice information "Agree" sent by the user and a voiceprint feature of the voice information matches a voiceprint feature of the user A stored in the vehicle, information about applications that are the same as those on the display 201 may be displayed on the display 203.

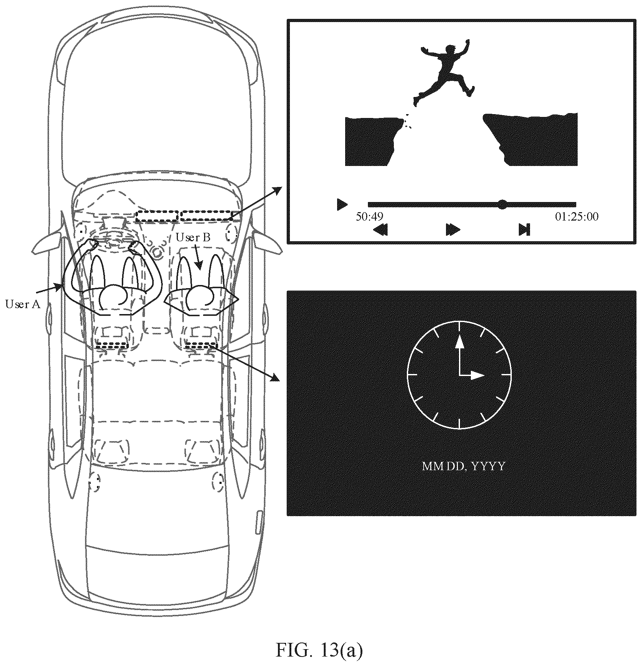

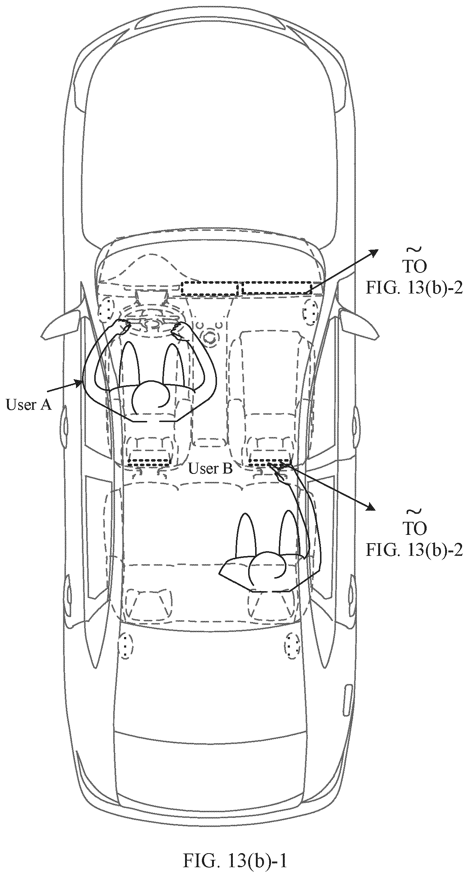

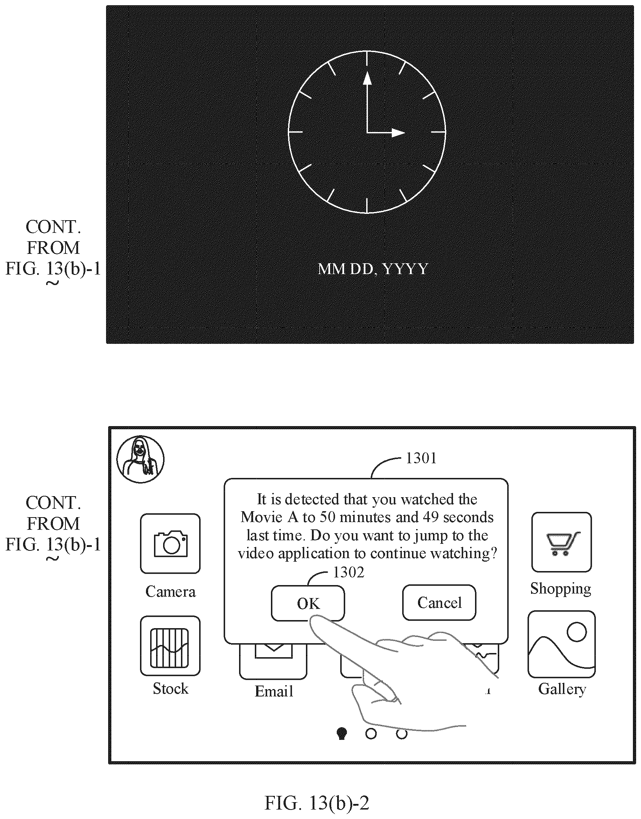

For example, FIG. 13(a), FIG. 13(b)-1, FIG. 13(b)-2, and FIG. 13(c) show another group of GUIs according to an embodiment of this application.

As shown in FIG. 13(a), the user B logs in to the account of the user B on the display 202. The user B may start a video application on the display 202, and display a play interface of a Movie A. In this case, the vehicle does not detect a user in a right area of the second row, and time and a date may be displayed on the display 204 by using the AOD function.

As shown in FIG. 13(b)-1 and FIG. 13(b)-2, when detecting that the user B moves from the driving area to the right area of the second row, the vehicle may control the display 202 to switch from displaying the play interface of the Movie A to displaying time and a date. In addition, the vehicle may further control the display 204 to switch from displaying the time and the date to displaying the information about the applications related to the user B and the profile picture of the user B. The vehicle may further display a prompt box 1301 on the display 204. The prompt box 1301 may include prompt information (for example, "It is detected that you watched the Movie A to 50 minutes and 49 seconds last time. Do you want to jump to the video application to continue watching?"), a determining control 1302, and a cancel control.

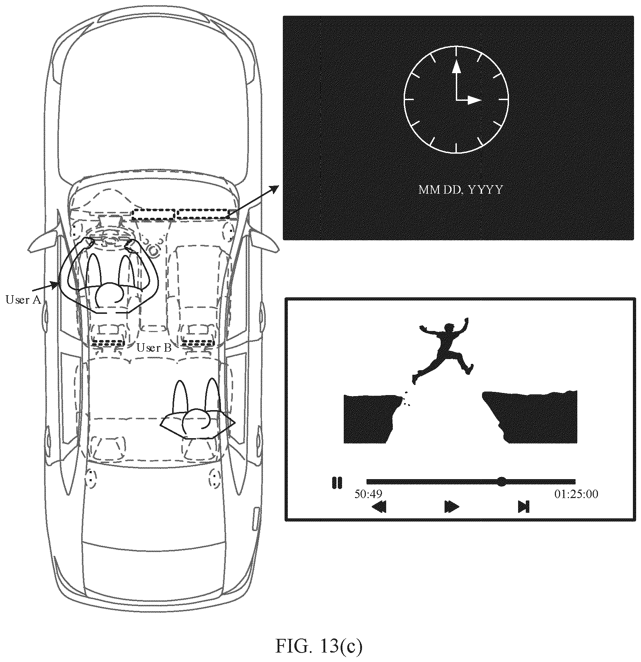

As shown in FIG. 13(c), when detecting an operation of tapping the control 1302 by the user, the vehicle may display the play interface of the Movie A on the display 204.

In an embodiment, if the user B leaves the front passenger area when the Movie A is played to 50 minutes and 49 seconds, a play interface starting from 50 minutes and 49 seconds may be displayed on the display 204. In this way, the user does not need to manually adjust a progress bar, and content played in the video can be automatically connected after the user changes the area, thereby helping improve driving experience of the user.

The foregoing describes several sets of GUIs provided in embodiments of this application with reference to FIG. 3(a)-1 to FIG. 3(c)-2 to FIG. 13(a), FIG. 13(b)-1, FIG. 13(b)-2, and FIG. 13(c). The following describes an implementation process of the technical solutions in embodiments of this application with reference to the accompanying drawings.

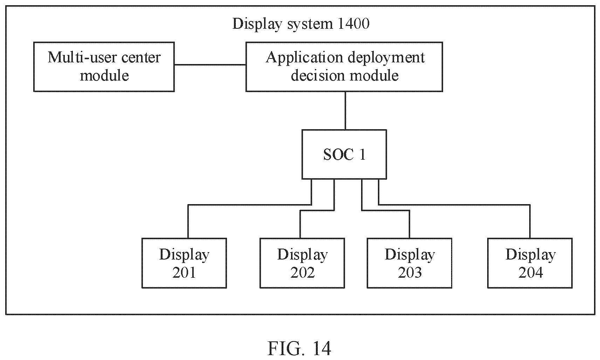

FIG. 14 is a diagram of a structure of a display system 1400 according to an embodiment of this application. As shown in FIG. 14, the system includes a multi-user center module, an application deployment decision module, a system-on-a-chip (system-on-a-chip, SOC) 1, and a display 201 to a display 204. The multi-user center module may store identity information of one or more users. For example, a vehicle may store, in the multi-user center module, a biometric feature entered by a user A, so that a correspondence between identity information of the user A and the biometric feature of the user A can be established. The vehicle may store, in the multi-user center module, a biometric feature entered by the user B, so that a correspondence between identity information of the user B and the biometric feature of the user B can be established.

The application deployment decision module may store a correspondence between a user and an interface element associated with the user. In FIG. 14, an example in which the interface element is an application is used for description. Table 1 shows correspondences between different users and interface elements associated with the users.

**Table 1**

| Identity information of a user | Application |
|---|---|
| User A | Application 1, application 2, and application 3 |
| User B | Application 1, application 4, and application 5 |
| ... | ... |
| User N | Application 6, application 7, and application 8 |

It should be understood that the correspondence shown in Table 1 is merely an example, and applications corresponding to different users may be totally the same, partially the same, or totally different. This is not limited in this embodiment of this application.

It should be further understood that the application deployment decision module may store correspondences between a user and different types of interface elements associated with the user. For example, the application deployment decision module may store correspondences between the user and a wallpaper, an animation, and an application that are associated with the user. For example, Table 2 shows another correspondence between a user and an interface element associated with the user.

**Table 2**

| Identity information of a user | Interface element |
|---|---|
| User A | Wallpaper 1 |
| | Animation 1 |
| | Application 1, application 2, and application 3 |
| User B | Wallpaper 2 |
| | Animation 2 |
| | Application 1, application 4, and application 5 |
| ... | ... |
| User N | Wallpaper N |
| | Animation N |
| | Application 6, application 7, and application 8 |

In an embodiment, the application deployment decision module may determine, based on a setting of the user, a correspondence between the user and an interface element associated with the user. For example, when it is detected that applications preferred by the user A are the application 1, the application 2, and the application 3, correspondences between the identity information of the user A and the application 1, the application 2, and the application 3 may be established.

In an embodiment, the application deployment decision module may determine, based on a frequency at which the user uses the application in a recent period of time (for example, one week or one month), the correspondence between the user and the interface element associated with the user. For example, applications that are most frequently used by the user A in a last week are respectively the application 1, the application 2, and the application 3. In this case, the application deployment decision module may establish correspondences between the identity information of the user A and the application 1, the application 2, and the application 3.

An SOC 1 user obtains data collected by a sensor in the vehicle, and determines, based on the data, whether there is a user in each area in the vehicle. For example, the SOC 1 may obtain data collected by a pressure sensor under a seat, to determine whether there is a user in each area. When determining that a pressure value obtained by a pressure sensor under a driving area seat is greater than or equal to a preset pressure threshold, the SOC 1 may determine that there is a user in the driving area. In this case, the SOC 1 may continue to control a camera (for example, a camera of a driver monitor system (driver monitor system, DMS) or a camera of a cabin monitor system (cabin monitor system, CMS)) in a cabin to start and collect an image in the driving area. In this way, identity information of the user in the driving area is determined based on the image collected by the camera and a facial feature of the user stored in the multi-user center module. For example, it may be determined that the user in the driving area is the user A.

For another example, when determining that a pressure value obtained by a pressure sensor under a front passenger area seat is greater than or equal to a preset pressure threshold, the SOC 1 may determine that there is a user in the front passenger area. In this case, the SOC 1 may continue to control a camera (for example, a DMS or a CMS) in a cabin to start and collect an image in the front passenger area. In this way, identity information of the user in the front passenger area is determined based on the image collected by the camera and a facial feature of the user stored in the multi-user center module. For example, it may be determined that the user in the front passenger area is the user B.

When the SOC 1 determines that the user in the driving area is the user A and the user in the front passenger area is the user B, the SOC 1 may control, based on the correspondence stored in the application deployment decision module, the display 201 in the driving area to display information about the application 1, the application 2, and the application 3, and control the display 202 in the front passenger area to display information about the application 1, the application 4, and the application 5.

In an embodiment, the SOC 1 may further display, based on an operation of the user, an interface element related to the user. For example, when determining that the user in the driving area is the user A and detecting that the user A does not tap the display 201, the SOC 1 may display the wallpaper 1 or the animation 1 on the display 201. When an operation of tapping the display 201 by the user A is detected, the display 201 may be controlled to switch from displaying the wallpaper 1 or the animation 1 to displaying the information about the application 1, the application 2, and the application 3.

It should be understood that, in the foregoing implementation, an example in which the SOC 1 separately controls different vehicle-mounted displays (for example, the display 201 and the display 202) is used for description. This embodiment of this application is not limited thereto. For example, the SOC 1 may further control different display areas of a same vehicle-mounted display to perform displaying. As shown in FIG. 10(b)-1 and FIG. 10(b)-2, the SOC 1 may control the display area 1001 of the long connected screen to display the information about the applications associated with the user A, and control the display area 1002 to display the information about the applications associated with the user B.

An architecture of the display system shown in FIG. 13(a), FIG. 13(b)-1, FIG. 13(b)-2, and FIG. 13(c) may alternatively be referred to as a one-core multi-screen display system, that is, a plurality of vehicle-mounted displays are controlled by using one chip (for example, the SOC 1). The plurality of vehicle-mounted displays include an instrument screen and the display 201 to the display 204.

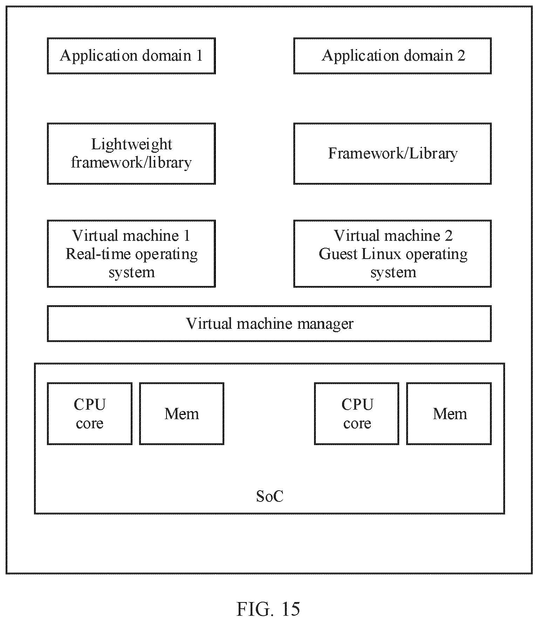

FIG. 15 is a diagram of a structure of a one-core multi-screen display system 1400 according to an embodiment of this application. The display system 1500 may simulate, by using a plurality of virtual machines, functions of hardware systems required by different types of operating systems, to run different types of operating systems in the display system 1500, and may manage the plurality of operating systems by using a virtual machine manager. For example, a virtual machine 1 may run a real time operating system (real time operation system, RTOS), and a virtual machine 2 may run a guest Linux operating system (guest Linux operation system). Based on a lightweight framework/library, an application domain 1 may be run on the virtual machine 1. The application domain 1 may include an application of an instrument domain. For example, the instrument screen may display the application of the instrument domain. Based on a framework/library, an application domain 2 may be run on the virtual machine 2. The application domain 2 may include an in-vehicle infotainment (in-vehicle infotainment, IVI) application. For example, the display 201, the display 202, the display 203, and the display 204 may display the IVI application.

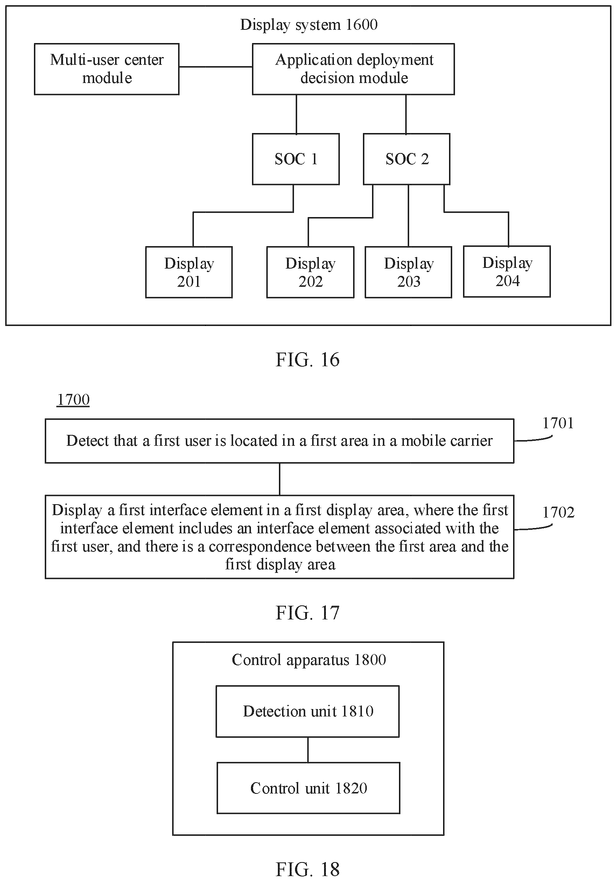

The technical solutions in this embodiment of this application may be implemented by using a one-core multi-screen display system, or may be implemented by using a multi-core multi-screen display system. FIG. 16 is a diagram of a structure of a display system 1600 according to an embodiment of this application. Different from the diagram of the structure shown in FIG. 14, the diagram of the structure shown in FIG. 16 further includes an SOC 2. The SOC 1 is configured to control display of the display 201, and the SOC 2 is configured to control display of the display 202 to the display 204.

For example, when determining that a pressure value obtained by a pressure sensor under a driving area seat is greater than or equal to a preset pressure threshold, the SOC 1 may determine that there is a user in the driving area. In this case, the SOC 1 may continue to control a camera (for example, a DMS or a CMS) in a cabin to start and collect an image in the driving area. In this way, identity information of the user in the driving area is determined based on the image collected by the camera and a facial feature of the user stored in the multi-user center module. For example, it may be determined that the user in the driving area is the user A. When the SOC 1 determines that the user in the driving area is the user A, the SOC 1 may control, based on the correspondence stored in the application deployment decision module, the display 201 in the driving area to display the application 1, the application 2, and the application 3.

For another example, when determining that a pressure value obtained by a pressure sensor under a front passenger area seat is greater than or equal to the preset pressure threshold, that a pressure value obtained by a pressure sensor under a second-row left-area seat is greater than or equal to the preset pressure threshold, and that a pressure value obtained by a pressure sensor under a second-row right-area seat is less than the preset pressure threshold, the SOC 2 may determine that there are users in the front passenger area and the left area of the second row, and that there is no user in the right area of the second row. In this case, the SOC 2 may continue to control a camera in a cabin to start and collect an image in the front passenger area and an image in the left area of the second row. In this way, identity information of the user in the front passenger area and identity information of the user in the left area of the second row are determined based on the images collected by the camera and facial features of the users stored in the multi-user center module. For example, it may be determined that the user in the front passenger area is the user B and the user in the left area of the second row is the user N. When the SOC 2 determines that the user in the front passenger area is the user B and the user in the left area of the second row is the user N, the SOC 2 may control, based on the correspondence stored in the application deployment decision module, the display 202 in the front passenger area to display information about the application 1, the application 4, and the application 5, and control the display 203 in the left area of the second row to display information about the application 6, the application 7, and the application 8.

It should be understood that, in FIG. 16, an example in which the SOC 1 is configured to control display of the display 201 and the SOC 2 is configured to control display of the display 202 to the display 204 is used for description. This embodiment of this application is not limited thereto. For example, the display system 1600 may further include an SOC 3 and an SOC 4. The SOC 1 is configured to control display of the display 201, the SOC 2 is configured to control display of the display 202, the SOC 3 is configured to control display of the display 203, and the SOC 4 is configured to control display of the display 204.

FIG. 17 is a schematic flowchart of a display method 1700 according to an embodiment of this application. The method may be performed by the foregoing vehicle or the display system. The method 1700 includes the following steps.

S1701: Detect that a first user is located in a first area in a mobile carrier.

The following uses an example in which the mobile carrier is a vehicle for description.

In an embodiment, whether there is a user in a plurality of areas in the vehicle may be determined based on data collected by one or more sensors in a cabin of the vehicle, and when there is a user in a specific area, identity information of the user may be determined.

In an embodiment, the plurality of areas include a driving area and a front passenger area.

In an embodiment, the plurality of areas include a driving area, a front passenger area, a left area of a second row, and a right area of the second row.

In an embodiment, for a seven-seat SUV, an in-vehicle area may be further divided into a driving area, a front passenger area, a left area of a second row, a right area of the second row, a left area of a third row, and a right area of the third row.

In this embodiment of this application, areas in the vehicle are divided based on locations of displays. For example, if the vehicle includes only a central control screen and a front passenger entertainment screen, the plurality of areas in the vehicle may include the driving area and the front passenger area. For another example, if the vehicle includes a central control screen, a front passenger entertainment screen, a second-row left-side entertainment screen, and a second-row right-side entertainment screen, the plurality of areas in the vehicle may include the driving area, the front passenger area, the second-row left-side area, and the second-row right-side area.

For example, whether there is a user in each area in the cabin may be determined based on an image collected by a camera. When there is a user in a specific area, identity information of the user may continue to be determined based on the image and a facial feature or an iris feature that is of the user and that is stored in the vehicle.

For example, whether there is a user in each area in the cabin may be determined based on a voice signal collected by a microphone array. When there is a user in a specific area, identity information of the user may continue to be determined based on a voiceprint feature of the voice signal and a voiceprint feature that is of the user and that is stored in the vehicle.

For example, whether there is a user in each area in the cabin may be determined with reference to a pressure sensor under a seat in each area. If a pressure value obtained by a pressure sensor under a seat in a specific area is greater than or equal to a preset pressure value, it may be determined that there is a user in the area and a camera in the cabin may be triggered to collect an image in the area. Identity information of the user in the area is determined based on the image in the area and a facial feature or an iris feature that is of the user and that is stored in the vehicle.

S1702: Display a first interface element in a first display area, where the first interface element includes an interface element associated with the first user, and there is a correspondence between the first area and the first display area.

Optionally, there is a correspondence between the first interface element and identity information of the first user. For the correspondence between the first interface element and the identity information of the first user, refer to the example described in Table 1 or Table 2.

Optionally, the method 1700 further includes: when it is detected that the first user is located in a second area in the mobile carrier, displaying the first interface element in a second display area, where there is a correspondence between the second area and the second display area.

For example, the first user may be the user A in FIG. 4(a)-1 to FIG. 4(b)-2, the first area may be the driving area, and the second area may be the front passenger area. As shown in FIG. 4(a)-1 and FIG. 4(a)-2, when the user A is located in the driving area, icons of the applications related to the user A may be displayed on the display 201. As shown in FIG. 4(b)-1 and FIG. 4(b)-2, when the user is located in the front passenger area, the icons of the applications related to the user A may be displayed on the display 202.

In this way, when an area of the first user in the mobile carrier changes, a display area of the first interface element may change accordingly, so that the first interface element is pushed to a corresponding display area along with the area of the user, thereby helping improve driving experience of the user in a plurality of display areas.

Optionally, the first user leaves the first area at a first moment, and the displaying a first interface element in a first display area includes: displaying a play interface of a first multimedia file in the first display area, where a play progress of the first multimedia file at the first moment is a first progress. The displaying the first interface element in a second display area includes: displaying, in the second display area, the play interface at the first progress.

For example, as shown in FIG. 13(a), when the user B leaves the front passenger area at a specific moment, a video play interface may be displayed on the display 202 corresponding to the front passenger area, and a video on the video play interface is played to 50 minutes and 49 seconds. As shown in FIG. 13(b)-1, FIG. 13(b)-2, and FIG. 13(c), when the area in which the user B is located is adjusted to the second-row right-side area, prompt information "It is detected that you watched the Movie A to 50 minutes and 49 seconds last time. Do you want to jump to the video application to continue watching?" may be displayed on the display 204. When an operation of tapping the control 1302 by the user is detected, the video play interface may be displayed on the display 204, and a video on the video play interface starts to be played from 50 minutes and 49 seconds.

In this way, when it is detected that the first user is located in the second area of the mobile carrier, the mobile carrier may restore, in the second display area, a progress of viewing the multimedia file in another area by the user, and the user does not need to open the multimedia file again and play the multimedia file from the beginning. This saves complex operations performed by the user when the user views the multimedia file, helps improve a degree of intelligence of the mobile carrier, and helps improve driving experience of the user.

It should be understood that recording the video play progress of the user in a specific area is merely an example. In embodiments of this application, a picture viewing progress, a music play progress, and the like of the user in a specific area may be further recorded. Alternatively, other information may be recorded. For example, when the user B leaves the front passenger area at a specific moment, a download interface of an application and a download progress of the application may be displayed on the display 202 corresponding to the front passenger area. When the area in which the user B is located is adjusted to the second-row right-side area, the download interface of the application may continue to be displayed on the display 204, and the application continues to be downloaded from the download progress when the user B leaves the front passenger area.

Optionally, the method 1700 further includes: when it is detected that a second user is located in a second area in the mobile carrier, displaying a second interface element in a second display area, where the second interface element includes an interface element associated with the second user, and there is a correspondence between the second area and the second display area.

For example, as shown in FIG. 5(c)-1 and FIG. 5(c)-2, when the user B is located in the front passenger area, the information about the applications related to the user B may be displayed on the display 202 in the front passenger area. Interface elements related to different users may be respectively displayed in different display areas of the vehicle. In this way, requirements of different users may be met when the vehicle includes a plurality of display areas.

Optionally, the method 1700 further includes: when it is detected that the first user is located in the second area and the second user is located in the first area, displaying the second interface element in the first display area, and displaying the first interface element in the second display area.

For example, as shown in FIG. 5(c)-1 and FIG. 5(c)-2 and FIG. 6(a) and FIG. 6(b), when the user A is located in the front passenger area and the user B is located in the driving area, the information about applications related to the user A may be displayed on the display 202, and the information about the applications related to the user B may be displayed on the display 201.

In this way, after areas in which the first user and the second user are located change, display areas in which the first interface element and the second interface element are located may be correspondingly adjusted, and the user does not need to perform manual adjustment. This helps improve a degree of intelligence of the mobile carrier, thereby helping improve driving experience of the user.

Optionally, the first user is the same as the second user, and the first interface element is the same as the second interface element.

Optionally, the method 1700 further includes: when it is detected that there is no user in the first area, controlling the first display area to enter a screen-off state, or displaying a sleep display interface in the first display area.

For example, as shown in FIG. 4(b)-1 and FIG. 4(b)-2, when there is no user in the driving area, the sleep display interface may be displayed on the display 201, and information about a clock and a date may be displayed on the sleep display interface. In this way, power consumption of the vehicle can be reduced.

The sleep display interface in this embodiment of this application is similar to an always on display interface on a terminal device (for example, a mobile phone). After the display is screened off, the vehicle can light, by using a self-luminescence feature of the display, some areas on the display to display information such as a clock, a date, a notification, and an animation, so that the user can view related information in a screen-off state.

Optionally, the first interface element is associated with identity information or a human body feature of the first user.

Optionally, the first interface element includes an interface element associated with the identity information of the first user. The method 1700 further includes: before displaying the first interface element in the first display area, detecting an operation of logging in to an account of the first user in the first display area.

For example, as shown in FIG. 3(b)-1 and FIG. 3(b)-2, the operation of logging in to the account of the first user includes an operation of tapping the facial recognition login control 3013 and an operation of scanning a QR code login control. For example, when detecting the operation of tapping the facial recognition login control by the user, the vehicle may start the camera to collect an image in the driving area, and determine identity information of the user in the driving area based on the image.

Optionally, the first interface element includes an interface element associated with the human body feature of the first user. The method 1700 further includes: before displaying the first interface element in the first display area, detecting that the first user does not log in to an account in the first display area within first duration.

For example, as shown in FIG. 8(a)-1 and FIG. 8(a)-2, when it is detected that there is a user in the second-row left-side area and the second-row right-side area, and an operation of logging in to an account of the user on the display 203 or the display 204 by the user is not detected within the first duration, information about applications related to a human body feature of the male user C in the second-row left-side area may be displayed on the display 203, and information about applications related to a human body feature of the female user D in the second-row right-side area may be displayed on the display 204.

For example, as shown in FIG. 9(a)-1 and FIG. 9(a)-2, when it is detected that there is a user in the second-row left-side area and the second-row right-side area, and an operation of logging in to an account of the user on the display 203 or the display 204 is not detected within the first duration, information about applications related to a human body feature of the juvenile user E in the second-row left-side area may be displayed on the display 203, and information about applications related to a human body feature of the elderly user F in the second-row right-side area may be displayed on the display 204.

Optionally, the mobile carrier includes a first vehicle-mounted display, and the first vehicle-mounted display includes the first display area and the second display area.

For example, as shown in FIG. 10(a)-1, FIG. 10(a)-2, FIG. 10(b)-1, and FIG. 10(b)-2, the central control screen and the front passenger entertainment screen in the cabin of the vehicle may be a same screen. The screen may be divided into two display areas: the area 1001 and the area 1002 respectively. The area 1001 may be a display area close to the driving area, and the area 1002 is a display area close to the front passenger area. When it is detected that the user A is located in the driving area, the information about the applications related to the user A may be displayed in the area 1001. When detecting that the user B is located in the front passenger area, the vehicle may display, in the area 1002, the information about the applications related to the user B.

Optionally, the mobile carrier includes a first vehicle-mounted display and a second vehicle-mounted display, the first vehicle-mounted display includes the first display area, and the second vehicle-mounted display includes the second display area.

For example, as shown in FIG. 5(c)-1 and FIG. 5(c)-2, the information about the applications related to the user A may be displayed on the display 201 of the vehicle, and the information about the applications related to the user B may be displayed on the display 202 of the vehicle. In this way, different areas may correspond to different vehicle-mounted displays, and users in different areas may view, in display areas of areas corresponding to the users, interface elements associated with the users.

Optionally, the first interface element includes one or more of a wallpaper, an animation, an icon of an application, or a card.

An embodiment of this application further provides an apparatus for implementing any one of the foregoing methods. For example, an apparatus including units (or means) configured to implement steps performed by the mobile carrier (for example, the vehicle) or the display system in any one of the foregoing methods is provided.

FIG. 18 is a block diagram of a control apparatus 1800 according to an embodiment of this application. The control apparatus 1800 includes a detection unit 1810 and a control unit 1820. The detection unit 1810 is configured to detect whether a first user is located in a first area in a mobile carrier. The control unit 1820 is configured to: when the detection unit 1810 detects that the first user is located in the first area, control a first display area to display a first interface element, where the first interface element includes an interface element associated with the first user, and there is a correspondence between the first area and the first display area.

Optionally, the control unit 1820 is further configured to: when the detection unit 1810 detects that the first user is located in a second area in the mobile carrier, control a second display area to display the first interface element, where there is a correspondence between the second area and the second display area.

Optionally, the first user leaves the first area at a first moment, and the control unit 1820 is specifically configured to: when the detection unit 1810 detects that the first user is located in the first area, control the first display area to display a play interface of a first multimedia file, where a play progress of the first multimedia file at the first moment is a first progress; and when the detection unit 1810 detects that the first user is located in the second area in the mobile carrier, control the second display area to display the play interface at the first progress.

Optionally, the control unit 1820 is further configured to: when the detection unit 1810 detects that a second user is located in a second area in the mobile carrier, control a second display area to display a second interface element, where the second interface element includes an interface element associated with the second user, and there is a correspondence between the second area and the second display area.

Optionally, the control unit 1820 is further configured to: when the detection unit 1810 detects that the first user is located in the second area and the second user is located in the first area, control the first display area to display the second interface element, and control the second display area to display the first interface element.

Optionally, the first user is the same as the second user, and the first interface element is the same as the second interface element.

Optionally, the control unit 1820 is further configured to: when the detection unit 1810 detects that there is no user in the first area, control the first display area to enter a screen-off state, or control the first display area to display a sleep display interface.

Optionally, the first interface element is associated with identity information or a human body feature of the first user.

Optionally, the first interface element includes an interface element associated with the identity information of the first user.

The detection unit 1810 is further configured to: before the control unit 1820 controls the first display area to display the first interface element, detect an operation of logging in to an account of the first user in the first display area.

Optionally, the first interface element includes an interface element associated with the human body feature of the first user. The detection unit 1810 is further configured to: before the control unit 1820 controls the first display area to display the first interface element, detect that the first user does not log in to an account in the first display area within first duration.

Optionally, the first display area and the second display area are display areas in a first vehicle-mounted display.

Optionally, the first display area is a display area in a first vehicle-mounted display, and the second display area is a display area in a second vehicle-mounted display.

Optionally, the first interface element includes one or more of a wallpaper, an animation, an icon of an application, or a card.

For example, the detection unit 1810 may be the computing platform in FIG. 1 or a processing circuit, a processor, or a controller on the computing platform. For example, the detection unit 1810 is the processor 151 on the computing platform. The processor 151 may obtain an image that of the first area and that is collected by the camera in the cabin. The processor 151 processes the image, to determine whether there is a user in the first area, and when there is a user in the first area, the processor 151 may determine an identity of the user. For another example, the processor 151 may obtain data collected by a pressure sensor under a seat. When determining, based on the data collected by the pressure sensor, that there is a user in the first area, the processor 151 may control the camera in the cabin to start and collect the image in the first area. The processor 151 processes the image, to determine an identity of the user in the first area.

For another example, the control unit 1820 may be the computing platform in FIG. 1 or a processing circuit, a processor, or a controller on the computing platform. For example, the control unit 1820 is the processor 152 on the computing platform, and the processor 152 may be configured to control display of the display apparatus. When the processor 151 determines that the first user is located in the first area, the processor 152 may generate image information, where the image information includes the first interface element. In addition, the processor 152 may control the first display area to display the image information. For example, when the processor 151 determines that the first user is located in the driving area, the processor 152 may control the display 201 to display the image information.

The functions implemented by the detection unit 1810 and the functions implemented by the control unit 1820 may be respectively implemented by different processors, or may be implemented by a same processor. This is not limited in this embodiment of this application.

It should be understood that division of the units in the foregoing apparatus is merely logical function division. During actual implementation, all or some of the units may be integrated into one physical entity, or may be physically separated. In addition, the units in the apparatus may be implemented in a form in which a processor invokes software. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor. The memory is a memory inside the apparatus or a memory outside the apparatus. Altematively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the foregoing units are implemented by designing a logical relationship between components in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the foregoing units. All units of the foregoing apparatus may be implemented in a form in which a processor invokes software, or implemented in a form of a hardware circuit, or some of the units are implemented in a form in which a processor invokes software, and remaining units are implemented in a form of a hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit. The logical relationship of the hardware circuit is fixed or reconfigurable. For example, the processor is a hardware circuit implemented by using an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that the units in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated together, or may be implemented independently. In an implementation, the units are integrated together and implemented in a form of an SOC. The SOC may include at least one processor, configured to implement any one of the foregoing methods or implement functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, to enable the apparatus to perform the method or step performed in the foregoing embodiment.

Optionally, if the apparatus is located in a vehicle, the processing unit may be the processors 151 to 15n shown in FIG. 1.

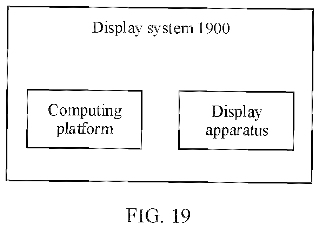

FIG. 19 is a block diagram of a display system 1900 according to an embodiment of this application. As shown in FIG. 19, the display system 1900 may include a computing platform and a display apparatus, and the computing platform may include the foregoing control apparatus 1800.

For example, the display apparatus may include a vehicle-mounted display, for example, the display apparatus 130 in FIG. 1, or one or more of the display 201, the display 202, the display 203, or the display 204 in FIG. 2.

An embodiment of this application further provides a mobile carrier. The mobile carrier may include the display system 1400, the display system 1500, the display system 1600, the control apparatus 1800, or the display system 1900.

Optionally, the mobile carrier may be a vehicle.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. **In** addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part that contributes to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, comprising:
when it is detected that a first user is located in a first area in a mobile carrier, displaying a first interface element in a first display area, wherein the first interface element comprises an interface element associated with the first user, and there is a correspondence between the first area and the first display area.

2. The method according to claim 1, wherein the method further comprises:
when it is detected that the first user is located in a second area in the mobile carrier, displaying the first interface element in a second display area, wherein there is a correspondence between the second area and the second display area.

3. The method according to claim 2, wherein the first user leaves the first area at a first moment, and the displaying a first interface element in a first display area comprises:
displaying a play interface of a first multimedia file in the first display area, wherein a play progress of the first multimedia file at the first moment is a first progress; and
the displaying the first interface element in a second display area comprises:
displaying, in the second display area, the play interface at the first progress.

4. The method according to claim 1, wherein the method further comprises:
when it is detected that a second user is located in a second area in the mobile carrier, displaying a second interface element in a second display area, wherein the second interface element comprises an interface element associated with the second user, and there is a correspondence between the second area and the second display area.

5. The method according to claim 4, wherein the method further comprises:
when it is detected that the first user is located in the second area and the second user is located in the first area, displaying the second interface element in the first display area, and displaying the first interface element in the second display area.

6. The method according to claim 4, wherein the first user is the same as the second user, and the first interface element is the same as the second interface element.

7. The method according to any one of claims 1 to 6, wherein the method further comprises:
when it is detected that there is no user in the first area, controlling the first display area to enter a screen-off state, or displaying a sleep display interface in the first display area.

8. The method according to any one of claims 1 to 7, wherein the first interface element is associated with identity information or a human body feature of the first user.

9. The method according to claim 8, wherein the first interface element comprises an interface element associated with the identity information of the first user, and the method further comprises:
before displaying the first interface element in the first display area, detecting an operation of logging in to an account of the first user in the first display area.

10. The method according to claim 8, wherein the first interface element comprises an interface element associated with the human body feature of the first user, and the method further comprises:
before displaying the first interface element in the first display area, detecting that the first user does not log in to an account in the first display area within first duration.

11. The method according to any one of claims 2 to 6, wherein the mobile carrier comprises a first vehicle-mounted display, and the first vehicle-mounted display comprises the first display area and the second display area.

12. The method according to any one of claims 2 to 6, wherein the mobile carrier comprises a first vehicle-mounted display and a second vehicle-mounted display, the first vehicle-mounted display comprises the first display area, and the second vehicle-mounted display comprises the second display area.

13. The method according to any one of claims 1 to 12, wherein the first interface element comprises one or more of a wallpaper, an animation, an icon of an application, or a card.

14. A control apparatus, wherein the control apparatus comprises a detection unit and a control unit, wherein
the detection unit is configured to detect whether a first user is located in a first area in a mobile carrier; and
the control unit is configured to: when the detection unit detects that the first user is located in the first area, control a first display area to display a first interface element, wherein the first interface element comprises an interface element associated with the first user, and there is a correspondence between the first area and the first display area.

15. The apparatus according to claim 14, wherein
the control unit is further configured to: when the detection unit detects that the first user is located in a second area in the mobile carrier, control a second display area to display the first interface element, wherein there is a correspondence between the second area and the second display area.

16. The apparatus according to claim 15, wherein the first user leaves the first area at a first moment, and the control unit is specifically configured to:
when the detection unit detects that the first user is located in the first area, control the first display area to display a play interface of a first multimedia file, wherein a play progress of the first multimedia file at the first moment is a first progress; and
when the detection unit detects that the first user is located in the second area, control the second display area to display the play interface at the first progress.

17. The apparatus according to claim 14, wherein
the control unit is further configured to: when the detection unit detects that a second user is located in a second area in the mobile carrier, control a second display area to display a second interface element, wherein the second interface element comprises an interface element associated with the second user, and there is a correspondence between the second area and the second display area.

18. The apparatus according to claim 17, wherein
the control unit is further configured to: when the detection unit detects that the first user is located in the second area and the second user is located in the first area, control the first display area to display the second interface element, and control the second display area to display the first interface element.

19. The apparatus according to claim 17, wherein the first user is the same as the second user, and the first interface element is the same as the second interface element.

20. The apparatus according to any one of claims 14 to 19, wherein
the control unit is further configured to: when the detection unit detects that there is no user in the first area, control the first display area to enter a screen-off state, or control the first display area to display a sleep display interface.

21. The apparatus according to any one of claims 14 to 20, wherein the first interface element is associated with identity information or a human body feature of the first user.

22. The apparatus according to claim 21, wherein the first interface element comprises an interface element associated with the identity information of the first user, wherein
the detection unit is further configured to: before the control unit controls the first display area to display the first interface element, detect an operation of logging in to an account of the first user in the first display area.

23. The apparatus according to claim 21, wherein the first interface element comprises an interface element associated with the human body feature of the first user, wherein
the detection unit is further configured to: before the control unit controls the first display area to display the first interface element, detect that the first user does not log in to an account in the first display area within first duration.

24. The apparatus according to any one of claims 15 to 19, wherein the first display area and the second display area are display areas in a first vehicle-mounted display.

25. The apparatus according to any one of claims 15 to 19, wherein the first display area is a display area in a first vehicle-mounted display, and the second display area is a display area in a second vehicle-mounted display.

26. The apparatus according to any one of claims 14 to 25, wherein the first interface element comprises one or more of a wallpaper, an animation, an icon of an application, or a card.

27. A control apparatus, wherein the apparatus comprises at least one processor and an interface circuit, and the processor communicates with a display apparatus through the interface circuit; and
the at least one processor is configured to: perform the method according to any one of claims 1 to 13, and control a display interface of the display apparatus.

28. A display system, wherein the display system comprises a computing platform and a display apparatus, and the computing platform comprises the control apparatus according to any one of claims 13 to 27.

29. A mobile carrier, comprising the control apparatus according to any one of claims 14 to 27, or comprising the display system according to claim 28.

30. The mobile carrier according to claim 29, wherein the mobile carrier is a vehicle.

31. A computer-readable storage medium, wherein the computer-readable storage medium stores a computer program, and when the computer program is executed by a computer, the method according to any one of claims 1 to 13 is implemented.

32. A chip, wherein the chip comprises a processor and a data interface, and the processor reads, through the data interface, instructions stored in a memory, to perform the method according to any one of claims 1 to 13.
